# EUROPÄISCHE PATENTANMELDUNG

(11) **EP 4 841 023 A1**
(43) Veröffentlichungstag der Anmeldung: **18.11.2026**
(21) Anmeldenummer: 26176680.2
(22) Anmeldetag: 05.05.2026
(51) Int. Cl.: E01C 23/088, H02J 1/15, H02J 3/00

(54) **STRASSENBAUMASCHINE MIT STEUERUNG EINER FUNKTIONSANORDNUNG NACH MASSGABE EINER VERFÜGBAREN ENERGIEMENGE**

(30) Priorität: 09.05.2025 DE 102025117991
(71) Anmelder: Wirtgen GmbH, 53578 Windhagen (DE)
(72) Erfinder: Kleingräber, Maximilian, 48231 Warendorf (DE); Bach, Markus, 53129 Bonn (DE)
(74) Vertreter: Ruttensperger Lachnit Trossin Gomoll

(57) **Zusammenfassung**

Eine Straßenbaumaschine (10) umfasst:
- einen Maschinenrahmen (12),
- ein auf einem Untergrund (U) abrollbar aufstehendes Fahrwerk (26), welches mit dem Maschinenrahmen (12) verbunden ist und den Maschinenrahmen (12) über dem Untergrund (U) trägt,
- eine vom Maschinenrahmen (12) getragene Funktionsanordnung (41) mit einer Mehrzahl von Funktionsbaugruppen (16, 18, 28, 38, 46, 54), umfassend:
+ als eine erste Funktionsbaugruppe eine Arbeitsbaugruppe (40) zur Bearbeitung eines von der Straßenbaumaschine (10) verschiedenen Bearbeitungsobjekts, und
+ als eine zweite Funktionsbaugruppe wenigstens einen Fahrantrieb (28) zur selbständigen Bewegung der Straßenbaumaschine (10) auf dem Untergrund (U),

- eine Energieversorgungsanordnung (96) zur Versorgung der Funktionsanordnung (41) mit Energie,
- eine Steuervorrichtung (38) zur Steuerung wenigstens der Funktionsanordnung.

Es ist vorgesehen, dass die Steuervorrichtung (38) zusätzlich dazu ausgebildet ist, die Funktionsanordnung (41) oder/und die Energieversorgungsanordnung (96) auf Grundlage wenigstens eines Verfügbarkeitsparameters (236, 238) zu steuern, wobei der wenigstens eine Verfügbarkeitsparameter (236, 238) eine mittels der Energieversorgungsanordnung (96) abgebbare Energiemenge repräsentiert.

## Beschreibung

Die vorliegende Anmeldung betrifft eine Straßenbaumaschine, umfassend:
- einen Maschinenrahmen,
- ein auf einem Untergrund abrollbar aufstehendes Fahrwerk, welches mit dem Maschinenrahmen verbunden ist und den Maschinenrahmen über dem Untergrund trägt,
- eine vom Maschinenrahmen getragene Funktionsanordnung mit einer Mehrzahl von Funktionsbaugruppen, umfassend:
   + als eine erste Funktionsbaugruppe eine Arbeitsbaugruppe zur Bearbeitung eines von der Straßenbaumaschine verschiedenen Bearbeitungsobjekts, und
   + als eine zweite Funktionsbaugruppe wenigstens einen Fahrantrieb zur selbständigen Bewegung der Straßenbaumaschine auf dem Untergrund,
- eine Energieversorgungsanordnung zur Versorgung der Funktionsanordnung mit Energie und
- eine Steuervorrichtung zur Steuerung wenigstens der Funktionsanordnung.

Eine solche Straßenbaumaschine ist als selbstfahrende Straßenbaumaschine allgemein bekannt. Sie kann sich aufgrund ihres Fahrantriebs selbstständig fortbewegen und rangieren. Außerdem kann sie mittels ihrer Arbeitsbaugruppe ein Bearbeitungsobjekt, wie etwa einen Boden, bearbeiten.

Besonders hingewiesen wird in diesem Zusammenhang auf die aus der DE 10 2021 133 306 A1 bekannte Straßenbaumaschine in Gestalt einer Straßenfräsmaschine. Die bekannte Straßenfräsmaschine weist eine Steuervorrichtung auf, welche in der Lage ist, aufgrund verschiedener Parameter den bei der Durchführung der Bearbeitungsaufgabe zu erwartenden Aufwand abzuschätzen. Die dabei herangezogenen Parameter berücksichtigen den Betrieb der Funktionsanordnung, die auszuführende Bearbeitungsaufgabe sowie die Struktur und Organisation der Baustelle, auf der die Straßenfräsmaschine eingesetzt ist.

Die so mögliche Aufwandsabschätzung erleichtert in technischer Hinsicht die Planung von künftigen Einsätzen der Straßenfräsmaschine auf Baustellen und in kaufmännischer Hinsicht die Erstellung entsprechender Angebote.

Weiter sind aus der DE 10 2015 111 249 A1 eine Straßenbaumaschine im Allgemeinen und eine Straßenfräsmaschine im Besonderen bekannt, deren Steuerungsvorrichtung dazu ausgebildet ist, Maschinenparameter, mit welchen die Straßenbaumaschine zur Ausführung einer Bearbeitungsaufgabe betrieben wird, unter Berücksichtigung von Materialeigenschaften des zu bearbeitenden Untergrundes nach Maßgabe eines erwarteten Verschleißverhaltens der eingesetzten Bodenbearbeitungswerkzeuge zu ermitteln und gegebenenfalls einzustellen.

Es ist also grundsätzlich bekannt, eine Straßenbaumaschine für die Ausführung einer konkreten Bearbeitungsaufgabe nach Maßgabe relevanter Randbedingungen so zu betreiben, dass in einem ausgewählten Parameterbereich, wie etwa dem Werkzeugverschleiß, ein verbessertes, bevorzugt ein optimales, Betriebsverhalten erreicht wird. Dies ist für das vorstehend genannte Beispiel eines Werkzeugverschleißes unmittelbar einsichtig, denn zu hoher Werkzeugverschleiß kann eine notwendige Wartung zu einem zeitlich früheren Zeitpunkt hin verlegen und kann somit unerwünschterweise die mögliche Einsatzdauer einer Straßenbaumaschine auf einer Baustelle verkürzen.

Die allermeisten der zum Zeitpunkt der vorliegenden Anmeldung auf Baustellen eingesetzten selbstfahrenden Straßenbaumaschinen weisen eine Diesel-Brennkraftmaschine als ein zentrales Kraftwerk auf, an welchem die von der Straßenbaumaschine zur Erledigung ihrer Bearbeitungsaufgabe benötigte Energie erzeugt und an die Funktionsbaugruppen der Funktionsanordnung der Straßenbaumaschine abgegeben wird.

Der für die Energieerzeugung an den bekannten Straßenbaumaschinen notwendige Dieselkraftstoff wird von jedem Einsatzplaner einer Straßenbaumaschine und auch von jedem Maschinenführer unausgesprochen und ohne weiteres Nachdenken als in ausreichender Menge zur Verfügung stehend angesehen.

Im Gegensatz zu dieser verbreiteten Haltung haben zum einen jüngste Krisen gezeigt, dass auch an bisher gewohnt ausreichend verfügbaren Kraftstoffen ein Versorgungsmangel eintreten kann. Zum anderen werden an Straßenbaumaschinen zunehmend auch andere als mineralölbasierte Energievorräte zur Bereitstellung von Betriebsleistung der Straßenbaumaschine genutzt, welche aufgrund abweichender Erzeugungs- und Speichermechanismen grundsätzlich eine von den zuvor genannten mineralölbasierten Kraftstoffen abweichende Verfügbarkeit aufweisen.

Aufgabe der vorliegenden Erfindung ist es, den vorstehend genannten Änderungen in der Energieversorgung von Straßenbaumaschinen Rechnung zu tragen und dafür zu sorgen, dass Straßenbaumaschinen auch unter Energieaspekten unter Vermeidung von unerwünschten Ausfall- und Stillstandzeiten an ihren jeweiligen Baustellen eingesetzt werden können.

Diese Aufgabe löst die vorliegende Erfindung an einer Straßenbaumaschine der eingangs genannten Art dadurch, dass die Steuervorrichtung zusätzlich dazu ausgebildet ist, die Funktionsanordnung oder/und die Energieversorgungsanordnung auf Grundlage wenigstens eines Verfügbarkeitsparameters zu steuern, wobei der wenigstens eine Verfügbarkeitsparameter eine mittels der Energieversorgungsanordnung abgebbare Energiemenge repräsentiert.

Die Steuervorrichtung steuert die Funktionsanordnung in der Regel durch quantitatives oder wenigstens qualitatives Einstellen wenigstens eines Betriebsparameters wenigstens einer ihrer Funktionsbaugruppen.

Die Steuervorrichtung steuert die Energieversorgungsanordnung in der Regel durch quantitatives oder wenigstens qualitatives Einstellen wenigstens eines ihrer Betriebsparameter.

Der Verfügbarkeitsparameter repräsentiert die Energiemenge, welche die Energieversorgungsanordnung an die Funktionsanordnung abgeben kann und ermöglicht somit grundsätzlich eine Vorhersage, ob eine Bearbeitungsaufgabe mit der Straßenbaumaschine ohne weitere Maßnahmen der Energiebevorratung vollständig erledigt werden kann. Die Kenntnis der verfügbaren Energiemenge ist auch Voraussetzung für eine Ermittlung der Zeitdauer, wie lange die Straßenbaumaschine unter definierten Betriebsbedingungen weiter betrieben werden kann.

Beispielsweise kann in einem Datenspeicher der Steuervorrichtung ein Arbeitsprofil, welches einen durchschnittlichen Energieverbrauch pro Zeiteinheit der Straßenbaumaschine enthält. Es können auch mehrere solche Arbeitsprofile hinterlegt sein. Im Falle mehrerer hinterlegter Arbeitsprofile kann für unterschiedliche Bearbeitungsaufgaben je wenigstens ein passendes Arbeitsprofil hinterlegt sein, wobei für die aktuell von der Straßenbaumaschine auszuführende Bearbeitungsaufgabe das geeignetste der vorhandenen Arbeitsprofile ausgewählt werden oder sein und als Grundlage für eine Ermittlung eines künftigen Energiebedarfs dienen kann. In Kenntnis eines künftigen Energiebedarfs kann anhand des Verfügbarkeitsparameters und der durch ihn repräsentierten verfügbaren Energiemenge abgeschätzt werden, ob eine bereits begonnene oder bevorstehende Bearbeitungsaufgabe ohne Weiteres zu Ende geführt werden kann.

Die beiden eingangs genannten Funktionsbaugruppen müssen nicht die einzigen Funktionsbaugruppen der Straßenbaumaschine sein und sind dies in der Regel auch nicht. Sie sind jedoch jene Funktionsbaugruppen, die unbedingt an der Straßenbaumaschine vorhanden sind. So kann die Funktionsanordnung eine weitere Funktionsbaugruppe aufweisen, welche hydraulische oder/und elektrische oder/und pneumatische Aktuatoren umfasst, um damit Bauteile zu einer Bewegung relativ zum Maschinenrahmen antreiben zu können. Die Aktuatoren können abhängig von ihrer Funktion Funktionsbaugruppen zugeordnet sein, etwa einer Lenkbaugruppe zur Lenkung der Straßenbaumaschine im Fahrbetrieb, einer Hubbaugruppe zur Verstellung der Höhe des Maschinenrahmens über dem Untergrund, und sonstigen Verstellaktuatoren, etwa zum Heben und Senken eines Daches eines Maschinenstandes, zum Verschwenken einer Laufeinheit des Fahrwerks oder einer massereichen Klappe am Maschinenkörper der Straßenbaumaschine. Zusätzlich oder alternativ kann wenigstens eine Funktionsbaugruppe als unbewegte Funktionsbaugruppe frei von Aktuatoren sein und dennoch Energie zur Bereitstellung ihrer Funktion benötigen. Beispielsweise kann die Beleuchtung der Straßenbaumaschine ebenso eine Funktionsbaugruppe sein wie die Steuerung der Straßenbaumaschine.

Häufig ist ein reiner Fahrbetrieb durch einen Betrieb des Fahrantriebs bei gleichzeitigem Stillstand oder wenigstens Leerlauf der Arbeitsbaugruppe ein Betriebszustand der Straßenbaumaschine mit niedrigem Energieverbrauch. Gleiches gilt für die vorstehend genannten möglichen weiteren Funktionsbaugruppen, die nicht Arbeitsbaugruppe sind. In der Regel ist der Energieverbrauch durch die Arbeitsbaugruppe in gleicher Zeit wesentlich, insbesondere um ein Vielfaches, höher als der Energieverbrauch des Fahrantriebs oder auch anderer Funktionsbaugruppen. So können über unterschiedliche Arbeitsprofile unterschiedliche Aktivitätsanteile unterschiedlicher Funktionsbaugruppen der Straßenbaumaschine am Gesamtbetrieb der Straßenbaumaschine berücksichtigt werden. In der Folge kann eine möglichst genaue Bestimmung des künftigen Energiebedarfs der Straßenbaumaschine oder ausgewählter Funktionsbaugruppen derselben ermittelt werden.

Dies sei an folgendem Beispiel veranschaulicht: abhängig von der im konkreten Einzelfall auszuführenden Bearbeitungsaufgabe kann ein Arbeitsprofil aus einer Mehrzahl von Arbeitsprofilen ausgewählt werden, welches der Arbeitsbaugruppe eine möglichst zutreffende, zur Erledigung der Bearbeitungsaufgabe notwendige Arbeits-Energiemenge zuordnet. Um sicherzustellen, dass die Straßenbaumaschine einen erwünschten Rest an Manövrierfähigkeit behält, kann in dem entsprechenden Arbeitsprofil für diese Restmanövrierfähigkeit eine Restmanövrier-Energiemenge reserviert sein. Diese Restmanövrier-Energiemenge kann von der durch den Verfügbarkeitsparameter repräsentierten insgesamt an der Straßenbaumaschine verfügbaren Energiemenge, gegebenenfalls unter Anwendung einer Sicherheitsmarge, abgezogen werden, sodass nur die erhaltene verbleibende Energiemenge als für die Bearbeitung der aktuellen Bearbeitungsaufgabe nutzbare Energiemenge zur Verfügung steht und zur Ermittlung herangezogen wird, ob die verfügbare nutzbare Energiemenge die Arbeits-Energiemenge übersteigt oder nicht. So kann beispielsweise sichergestellt werden, dass die Straßenbaumaschine in jedem Fall aus eigener Kraft auf ein Transportfahrzeug verladen werden kann.

Abhängig von den Besonderheiten der jeweiligen Baustelle, etwa von den zurückzulegenden Wegen, kann innerhalb des Arbeitsprofils ein geeignetes Unterprofil für die Fahr- und Rangiertätigkeit aus mehreren Unterprofilen auswählbar sein, welches den Energiebedarf des Fahrbetriebs möglichst exakt abbildet.

Die Straßenbaumaschine kann wenigstens einen Sensor, vorzugsweise eine Mehrzahl von Sensoren, umfassen, welcher bzw. welche eine verfügbare Energiemenge in der oder an der Straßenbaumaschine erfassen. Der wenigstens eine Sensor ist bevorzugt signalübertragungsmäßig mit der Steuervorrichtung der Straßenbaumaschine verbunden, sodass ein Sensorsignal, welches eine vom Sensor erfasste verfügbare Energiemenge oder Teil-Energiemenge repräsentiert, zur Bildung des Verfügbarkeitsparameters an die Steuervorrichtung übertragen werden kann.

Die Straßenbaumaschine kann nicht nur die Funktionsanordnung, also wenigstens eine Funktionsbaugruppe, nach Maßgabe des Verfügbarkeitsparameters steuern, sondern kann zusätzlich oder alternativ, etwa über eine Leistungsschaltung, die Energieversorgungsanordnung nach Maßgabe des Verfügbarkeitsparameters steuern. So kann die Steuervorrichtung bewirken, dass die durch den Verfügbarkeitsparameter repräsentierte verfügbare Energiemenge für eine vorbestimmte oder durch die Steuervorrichtung ermittelte Restbetriebsdauer ausreicht.

Die durch den Verfügbarkeitsparameter repräsentierte verfügbare Energiemenge kann ein Energievorrat, etwa ein Kraftstoffvorrat für eine Brennkraftmaschine oder/und ein Brennstoffvorrat für eine Brennstoffzellenanordnung oder/und eine Ladung eines aufladbaren elektrischen Energiespeichers, wie etwa einer Batterie, sein. Die Aufzählung ist beispielhaft und nicht vollständig. Je nach Energieträger und Energiebereitstellung kann wenigstens ein geeigneter Sensor zur Erfassung der Energiemenge an der Straßenbaumaschine vorgesehen sein.

Zusätzlich oder alternativ zur vorstehend beschriebenen prospektiven Betrachtungsweise, bei welcher der Verfügbarkeitsparameter Ausgangsgröße ist und eine für eine bevorstehende, zu erledigende Bearbeitungsaufgabe abgebbare und somit verfügbare Energiemenge repräsentiert, kann der Verfügbarkeitsparameter auch in einer retrospektiven Betrachtungsweise Zielgröße sein und eine nach Erledigung einer zurückliegenden Bearbeitungsaufgabe übrige abgebbare bzw. verfügbare Energiemenge repräsentieren.

Zur Klarstellung sei betont, dass der Verfügbarkeitsparameter, auch wenn er gemäß obiger Angabe eine verfügbare Energiemenge repräsentiert, kein zwingend in der Einheit einer Energie, also etwa in Joule, angegebener Größenwert sein muss. Der Verfügbarkeitsparameter repräsentiert beispielsweise bereits dann eine verfügbare Energiemenge, wenn er einen Energieträger hinreichend genau mengenmäßig angibt, welcher aufgrund von in einem Datenspeicher oder im Betriebsprogramm der Steuervorrichtung niedergelegten Datenzusammenhängen mit einer von der Funktionsanordnung leistbaren Arbeit korreliert ist, etwa unter Berücksichtigung einer oder mehreren notwendigen Wandlungen einer bereitgestellten Energieform in eine tatsächlich von einer Funktionsbaugruppe unmittelbar nutzbare Energieform sowie unter Berücksichtigung des dabei jeweils realistisch erzielbaren Wirkungsgrads eines oder mehrerer beteiligter Energiewandler.

Wenngleich der vorstehend genannte Verfügbarkeitsparameter mit der Repräsentation einer verfügbaren Energiemenge der Steuervorrichtung eine Grundlage für die Steuerung der Funktionsanordnung oder/und der Energieversorgungsanordnung bietet, kann die Funktionsanordnung oder/und die Energieversorgungsanordnung nach Maßgabe des Verfügbarkeitsparameters präziser gesteuert werden, wenn der Verfügbarkeitsparameter einen zeitbezogenen Verfügbarkeitsparameter umfasst oder ein zeitbezogener Verfügbarkeitsparameter ist, welcher eine mittels der Energieversorgungsanordnung pro Zeiteinheit abgebbare Energiemenge repräsentiert. Es handelt sich dabei insbesondere um eine pro Zeiteinheit an die Funktionsanordnung abgebbare Energiemenge, denn die Steuerung der Funktionsanordnung oder/und der Energieversorgungsanordnung nach Maßgabe des Verfügbarkeitsparameters soll schließlich bevorzugt dafür sorgen, dass der Funktionsanordnung, d. h. wenigstens einer Funktionsbaugruppe derselben, ausreichend Energie für einen weiteren Betrieb bis zum Erreichen einer vorbestimmten oder ermittelten Restbetriebsdauer zur Verfügung steht, um ein vorzeitiges Betriebsende oder einen ungeplanten Stillstand zu vermeiden.

Es kann nämlich sein, und dies ist vermutlich sogar der Normalfall, dass zwar eine bestimmte Energiemenge nominell verfügbar ist, diese Energiemenge aber nicht beliebig schnell abrufbar und somit nutzbar ist. So kann beispielsweise in einer elektrischen Batterie zwar eine verhältnismäßig große elektrische Ladungsmenge gespeichert sein. Diese kann jedoch aufgrund des Innenwiderstands der Batterie nicht instantan, sondern nur mit einer gewissen Abrufrate abrufbar sein. Als weiteres Beispiel sei auf den Brennstoffvorrat einer Brennstoffzelle verwiesen, welcher ebenfalls nicht instantan, sondern gemäß der Leistungscharakteristika der Brennstoffzelle in elektrische Energie umgesetzt und für einen oder mehrere elektrische Verbraucher nutzbar gemacht werden kann.

Im Grunde gilt dies auch für die eingangs genannte Straßenbaumaschine mit einer Diesel-Brennkraftmaschine als einem zentralen Kraftwerk, denn auch die Brennkraftmaschine kann den Diesel nicht schlagartig in eine für die Straßenbaumaschine nutzbare Energieform umwandeln, sondern nur gemäß ihrer Leistungscharakteristika. Allerdings ist bei Straßenbaumaschinen mit einem einzigen zentralen Kraftwerk das Problem der Korrelation zwischen einem Energievorrat und einer sich daraus ergebenden Restbetriebsdauer der Funktionsanordnung dadurch abgemildert, dass alle unmittelbar oder mittelbar durch das zentrale einzige Kraftwerk, insbesondere durch die Brennkraftmaschine, angetriebenen Funktionsaggregate auf die Nennleistung oder allgemein auf eine Bezugsleistung des einzigen Kraftwerks, insbesondere der Brennkraftmaschine, ausgelegt sind. Dadurch lässt sich aus der vorhandenen Kraftstoffmenge und in Kenntnis der Leistungscharakteristika des einzigen Kraftwerks der Straßenbaumaschine eine Restbetriebsdauer ohne große Schwierigkeiten mit hinreichender Genauigkeit ermitteln.

Komplexer ist ein Energiemanagement an einer Straßenbaumaschine dann, wenn die Energieversorgungsanordnung mehrere Energieversorgungsvorrichtungen aufweist, von welchen zwar jede Energie an die Funktionsanordnung abgeben kann, jedoch aufgrund unterschiedlicher Leistungscharakteristika der Energieversorgungsvorrichtungen in jeweils unterschiedlicher Weise, insbesondere in jeweils unterschiedlichen Raten. Insbesondere, aber nicht nur, in solchen Fällen einer Straßenbaumaschine mit mehreren Energieversorgungsvorrichtungen setzt die vorliegende Erfindung an, um ein effizientes konzertiertes Zusammenwirken mehrerer, vorzugsweise aller, Energieversorgungsvorrichtungen der Energieversorgungsanordnung zu erreichen und somit einen effizienten Betrieb der Straßenbaumaschine zu bewirken.

Ein weiterer Ansatzpunkt der vorliegenden Anmeldung ist die Steuerung einer Straßenbaumaschine mit nur einer Energieversorgungsvorrichtung, für deren Betrieb aufgrund von im Energieversorgungspfad von der Energieversorgungsvorrichtung zur ersten oder/und zweiten Funktionsbaugruppe zwischenangeordneten Energiewandlern Randbedingungen entfallen sind, welche ansonsten bei Nutzung der unmittelbar von der Energieversorgungsvorrichtung ausgegebenen Energieform durch die Funktionsbaugruppe bisher bestanden haben. Gibt beispielsweise eine Brennkraftmaschine mechanische Energie aus, welche, in der Regel über wenigstens ein Getriebe, ohne Wandlung der Energieform zur Arbeitsbaugruppe, etwa zu einem Fräsaggregat mit einer Fräswalze als einer Arbeitsvorrichtung, übertragen wird, kann die Energie der Brennkraftmaschine nur unter Beachtung einer an der Arbeitsbaugruppe benötigten Arbeitsdrehzahl oder/und eines Arbeitsdrehmoments der Arbeitsvorrichtung bereitgestellt werden. Die Vorgabe einer Drehzahl oder/und eines Drehmoments an der Arbeitsbaugruppe wirkt aufgrund der mechanischen Kopplung zwischen Funktionsbaugruppe und Energieversorgungsvorrichtung unmittelbar auf die Energieversorgungsvorrichtung zurück. Ein im Drehmomentpfad angeordnetes Getriebe verändert nur betragsmäßig das Verhältnis von Drehmoment und Drehzahl zwischen Eingangs- und Ausgangsseite des Getriebes, ändert jedoch nichts an der grundsätzlichen Verknüpfung der an der Arbeitsvorrichtung herrschenden Drehzahl mit der Drehzahl der Antriebswelle der Brennkraftmaschine.

Durch Zwischenanordnung eines oder mehrerer Energiewandler kann die vorstehend geschilderte Verknüpfung der Drehzahlen und Drehmomente der Energieversorgungsanordnung, insbesondere einer einzigen Energieversorgungsvorrichtung, einerseits und der ersten Funktionsbaugruppe, insbesondere der Arbeitsbaugruppe, andererseits entfallen. Gibt die Energieversorgungsanordnung mechanische Energie aus und wird diese, etwa durch einen Generator, in elektrische Energie und anschließend erneut in mechanische Energie gewandelt, etwa durch einen Elektromotor, ist für den Betrieb der Energieversorgungsanordnung nurmehr der Energiebedarf der ersten Funktionsbaugruppe, insbesondere der Arbeitsbaugruppe, maßgeblich, den es zu decken gilt. Einzelne Betriebsparameter, wie beispielsweise Drehzahlen und Drehmoment einer rotierenden Arbeitsvorrichtung, etwa einer Fräswalze, bilden keine nennenswerte Randbedingung für den Betrieb der Energieversorgungsanordnung mehr, insbesondere der einzigen Energieversorgungsvorrichtung. Ein Elektromotor kann in einem so weitem Betriebsparameterbereich betrieben werden, dass die von ihm ausgegebene Leistung zu der Betriebssituation der rotierenden Arbeitsvorrichtung passt. Die Energieversorgungsvorrichtung muss hierfür lediglich den benötigten Antriebsstrom bzw. die benötigte Antriebsleistung liefern.

Als Energieversorgungsvorrichtung im Sinne der vorliegenden Anmeldung gilt eine technische Vorrichtung zur Energieabgabe dann, wenn sie in der Lage ist, Energie an die Funktionsanordnung unabhängig vom Betrieb einer anderen Energieversorgungsvorrichtung abzugeben. Dies sei nachfolgend an zwei Beispielen erläutert:
An herkömmlichen Straßenbaumaschinen mit einer Brennkraftmaschine als zentralem Kraftwerk ist in vielen Fällen der Fahrantrieb als Hydroantrieb ausgebildet. Die Brennkraftmaschine treibt bevorzugt über ein Pumpenverteilergetriebe wenigstens eine Hydraulikpumpe an, welche in einem Hydraulikkreislauf den Hydraulikdruck für den Betrieb des Fahrantriebs erzeugt. Die Hydraulikpumpe ist in diesem Falle keine Energieversorgungsvorrichtung, denn ihre Energieabgabe ist unmittelbar abhängig vom Betrieb der Brennkraftmaschine. Die Hydraulikpumpe ist in diesem Falle lediglich ein Energiewandler, welcher von der Brennkraftmaschine erzeugte Energie von der Energieform mechanischer Energie in die davon abweichende Energieform hydraulischer Energie wandelt. Ist in dem Hydraulikkreislauf des Fahrantriebs jedoch ein Hydraulikdruckspeicher angeordnet, kann dieser eine Energieversorgungsvorrichtung sein, denn der Hydraulikdruckspeicher kann auch dann Energie zumindest über eine gewisse Zeit hinweg an die Funktionsanordnung abgeben, wenn die Brennkraftmaschine als zentrales Kraftwerk außer Betrieb ist.

Entsprechendes gilt mutatis mutandis dann, wenn die Brennkraftmaschine einen elektrischen Generator zur Erzeugung elektrischer Energie antreibt. Energieversorgungsvorrichtung ist dann ohne weiteres nur die Brennkraftmaschine oder die Baugruppe aus Brennkraftmaschine und Generator, nicht jedoch der Generator alleine. Ist jedoch im elektrischen Kreislauf eine Batterie als Pufferspeicher angeordnet, kann die Batterie aufgrund ihrer Fähigkeit, elektrische Energie unabhängig von anderen Energiequellen an die Funktionsanordnung abzugeben, eine Energieversorgungsvorrichtung sein.

Gemäß einer bevorzugten Weiterbildung ist die Steuervorrichtung dazu ausgebildet, die Funktionsanordnung oder/und die Energieversorgungsanordnung zusätzlich zum Verfügbarkeitsparameter unter Berücksichtigung
- wenigstens eines künftigen Betriebsereignisses der Funktionsanordnung oder/und der Energieversorgungsanordnung
   oder/und
- wenigstens eines Betriebszustandes der Funktionsanordnung oder/und der Energieversorgungsanordnung
zu steuern.

Die Steuervorrichtung kann dann über eine bloße Ist-Situation hinaus prognostisch ein künftiges Ereignis in die Steuerung der Funktionsanordnung oder/und der Energieversorgungsanordnung einbeziehen. Ein solches künftiges Ereignis kann beispielsweise ein vorübergehendes Ende der Bearbeitung des Bearbeitungsobjekts sein, etwa weil aus Gründen der Baustellenorganisation oder aus Gründen einer notwendigen Wartung oder verschleißbedingten Reparatur der Funktionsanordnung eine Weiterbearbeitung vorübergehend nicht möglich ist.

Entsprechendes gilt auch für einen Betriebszustand. Ist der Steuervorrichtung beispielsweise bekannt, dass nach Ablauf einer prognostizierten oder bekannten Zeitdauer die Bearbeitung des Bearbeitungsobjekts vorübergehend endet, kann die Funktionsanordnung oder/und die Energieversorgungsanordnung für diese verbleibende Zeitdauer stärker beansprucht werden, etwa unter Inkaufnahme einer stärkeren Erwärmung, als wenn die Bearbeitung ohne Unterbrechung fortgesetzt werden könnte.

Für eine noch präzisere und bessere Ausnutzung der an der Straßenbaumaschine verfügbaren Energiemenge kann die Steuervorrichtung stärker bevorzugt dazu ausgebildet sein, die Funktionsanordnung oder/und die Energieversorgungsanordnung zusätzlich zum Verfügbarkeitsparameter unter Berücksichtigung
- einer Mehrzahl von künftigen Betriebsereignissen der Funktionsanordnung oder/und der Energieversorgungsanordnung
   oder/und
- einer Mehrzahl von künftigen Betriebszuständen der Funktionsanordnung oder/und der Energieversorgungsanordnung
zu steuern.

So kann die Steuervorrichtung in Kenntnis nicht nur des Beginns, sondern auch der Dauer oder des Endes einer zukünftigen Betriebsunterbrechung die abgebbare Energiemenge anders abrufen und zur Bearbeitung des Bearbeitungsobjekts einsetzen als wenn der Beginn oder/und die Dauer oder/und das Ende der Betriebsunterbrechung nicht bekannt wäre bzw. wären. Dies gilt insbesondere dann, wenn die Betriebsunterbrechung zum Auffüllen wenigstens eines Energievorrats oder/und zur Regenerierung wenigstens einer Energieversorgungsvorrichtung der Straßenbaumaschine genutzt werden kann. In der Regel bewirkt dabei das Auffüllen eines Energievorrats stets eine Regenerierung der von dem Energievorrat zehrenden Energieversorgungsvorrichtung. Wird jedoch beispielsweise ein aktuell nicht nutzbarer Netzanschluss zu einem zukünftigen Zeitpunkt nutzbar, wird so eine Energieversorgungsvorrichtung aktiviert, ohne hierfür einen Energievorrat aufzufüllen.

Da es ein Ziel der vorliegenden technischen Offenbarung ist, die Erledigung der unmittelbar anstehenden oder bereits begonnenen Bearbeitungsaufgabe zu gewährleisten oder/und einen unerwünschten Stillstand der Straßenbaumaschine oder ihrer Arbeitsbaugruppe zu vermeiden, ist gemäß einer bevorzugten Weiterbildung der vorliegenden Erfindung die Steuervorrichtung dazu ausgebildet, die Funktionsanordnung oder/und die Energieversorgungsanordnung auf Grundlage wenigstens einer Restzeitinformation zu steuern, wobei die wenigstens eine Restzeitinformation eine Restbetriebsdauer der Arbeitsbaugruppe repräsentiert.

Eine Restzeitinformation kann dabei in einem oder in mehreren oder in allen von wenigstens drei unterschiedlichen Aspekten auftreten und durch die Steuervorrichtung verarbeitet werden, nämlich als Restzeitpotential, als Restzeitbedarf und als Restzeitkontingent.

Ein Restzeitpotential ist eine Restzeitinformation, welche eine künftige Zeitdauer repräsentiert, über die hinweg die Funktionsanordnung gemäß dem Verfügbarkeitsparameter in einer gegebenen oder/und angenommenen oder/und prognostizierten Betriebssituation betrieben werden kann.

Ein Restzeitbedarf ist eine Restzeitinformation, welche eine künftige Zeitdauer repräsentiert, die unter vorgegebenen oder/und angenommenen oder/und prognostizierten Betriebsparametern der Funktionsanordnung benötigt wird, um eine aktuelle oder eine unmittelbar bevorstehende Bearbeitungsaufgabe zu erledigen.

Ein Restzeitkontingent ist eine Restzeitinformation, welche angibt, bis wann oder für wie lange die Funktionsanordnung betrieben werden kann oder in der Regel soll, bevor der Betrieb aus Gründen, die nicht in unmittelbarem Zusammenhang mit dem Verfügbarkeitsparameter stehen, wenigstens vorübergehend endet. Solche Gründe können beispielsweise rechtlicher oder organisatorischer oder technischer Natur sein. Die oben genannte Kenntnis einer zukünftigen Betriebsunterbrechung oder eines zukünftigen Betriebsendes ist ein Beispiel für eine Restzeitinformation in Gestalt eines Restzeitkontingents. Sie gibt an, wie lange die Funktionsanordnung theoretisch nutzbar ist.

Rechtliche oder/und organisatorische Gründe für eine zukünftige Betriebsunterbrechung, wie etwa Betriebspausen, Schichtpläne, Nachtarbeitsverbote, können gänzlich unabhängig vom Verfügbarkeitsparameter sein. Technische Gründe für eine zukünftige Betriebsunterbrechung, wie etwa verschleißbedingte Wartung, können mittelbar vom Verfügbarkeitsparameter abhängen, etwa wenn aufgrund des Verfügbarkeitsparameters Betriebsparameter der Funktionsanordnung so eingestellt werden, dass dadurch eine zunächst herrschende Verschleißrate verringert wird. Ein unmittelbarer Zusammenhang mit dem Verfügbarkeitsparameter besteht jedoch nicht.

Im Gegensatz zum Restzeitpotential, für dessen Ermittlung eine definierte verfügbare Energiemenge, in der Regel null oder eine vorbestimmte Sicherheitsreserve, eine Rolle spielt, spielt für die Ermittlung eines Restzeitkontingents die zum Zeitpunkt des Eintritts eines den Betrieb der Funktionsanordnung beendenden, das Restzeitkontingent begründenden Ereignisses noch verfügbare Energiemenge keine Rolle.

Ausgangspunkt für die Bestimmung des Restzeitbedarfs ist die zu erledigende Bearbeitungsaufgabe, also etwa das abzutragende Bodenvolumen, das Bodenmaterial charakterisierende Bodenparameter, wie Zusammensetzung oder/und Körnung oder/und Dichte oder/und Härte. Maßgeblich für die zur Erledigung der charakterisierten Bearbeitungsaufgabe ist weiter das eingesetzte Bodenbearbeitungswerkzeug, Betriebsparameter der Funktionsanordnung, wie Drehzahl und Vorschub einer Abtragsvorrichtung, sowie weitere Gegebenheiten der Einsatzbaustelle, etwa ob das abzutragende Bodenvolumen in einer langen Bahn geringer Abtragstiefe oder in mehreren kurzen Bahnen größerer Abtragstiefe abzutragen ist. Manche der den Restzeitbedarf beeinflussenden Einflussparameter sind von der verfügbaren Energiemenge grundsätzlich unabhängig. Andere der den Restzeitbedarf beeinflussenden Einflussparameter, wie etwa Betriebsparameter der Funktionsanordnung, stehen mit der verfügbaren Energiemenge in einer Wechselbeziehung dahingehend, dass ihr Wert Einfluss auf den Energieverbrauch der Straßenbaumaschine hat und sie dadurch die verfügbare Energiemenge und somit den Verfügbarkeitsparameter beeinflussen. Die vorliegende auf den Verfügbarkeitsparameter fußende Steuerung der Funktionsanordnung oder/und der Energieversorgungsanordnung hat daher in der Regel auch wieder eine Rückwirkung auf die Einflussparameter und damit auf den Restzeitbedarf.

Bevorzugt ist die Steuervorrichtung auch dazu ausgebildet, wenigstens einen Teil der wenigstens einen Restzeitinformation zu ermitteln.

Die Steuervorrichtung kann dazu ausgebildet sein, wenigstens einen Teil der wenigstens einen Restzeitinformation aus wenigstens einem Zeitinformations-Parameter zu ermitteln, wobei der wenigstens eine Zeitinformations-Parameter wenigstens einen der folgenden Parameter umfasst oder/und auf Grundlage wenigstens eines der folgenden Parameter ermittelt wird:
- wenigstens einen Funktions-Parameter der Funktionsanordnung,
- wenigstens einen Betriebsparameter der Funktionsanordnung,
- wenigstens einen Energie-Parameter der Energieversorgungsanordnung,
- wenigstens einen Bearbeitungsparameter einer aktuell ausgeführten oder/und künftig auszuführenden Bearbeitungsaufgabe,
- wenigstens einen Baustellenparameter.

Wenigstens einige der genannten Parameter sind vorliegend Zeitinformations-Parameter, da sie einen Einfluss auf die Zeitdauer haben oder eine Information über die Zeitdauer enthalten, über welche hinweg die verfügbare Energiemenge unter gegebenen Betriebsbedingungen für einen Betrieb ausreicht. Diese Zeitinformations-Parameter dienen überwiegend oder ausschließlich der Ermittlung eines Restzeitpotentials.

Wenigstens einige der genannten Parameter sind vorliegend Zeitinformations-Parameter, da sie einen Einfluss auf die Zeitdauer haben oder eine Information über die Zeitdauer enthalten, die eine aktuelle oder unmittelbar bevorstehende Bearbeitungsaufgabe bis zu ihrer Erledigung benötigt. Diese Zeitinformations-Parameter dienen überwiegend oder ausschließlich der Ermittlung eines Restzeitbedarfs.

Wenigstens einige der genannten Parameter sind vorliegend Zeitinformations-Parameter, da sie eine Information über eine noch zur Verfügung stehende Nutzungsdauer der Straßenbaumaschine enthalten, für welche die Straßenbaumaschine betrieben werden kann. Diese Zeitinformations-Parameter dienen überwiegend oder ausschließlich der Ermittlung eines Restzeitkontingents.

Die auszuführende Bearbeitungsaufgabe kann Teil eines Bearbeitungsauftrags mit mehreren Bearbeitungsaufgaben sein. Es kann eine vollständige Bearbeitungsaufgabe sein, die noch nicht begonnen wurde. Die Bearbeitungsaufgabe kann bereits begonnen worden sein, sodass die Zeitdauer nur den noch nicht erledigten Rest der Bearbeitungsaufgabe betrifft.

Da die Straßenbaumaschine als Primäraufgabe die Bearbeitung des Bearbeitungsobjekts, wie beispielsweise eines Bodenbereichs, hat und die selbsttätige bodengebundene Bewegung der Straßenbaumaschine demgegenüber nur unterstützende Funktion zur Erledigung der Primäraufgabe ist, und da außerdem der Betrieb der Funktionsanordnung, insbesondere der Arbeitsbaugruppe, während einer Bodenbearbeitung, den pro Zeiteinheit größten Energieverbrauch aufweist, ist ein mögliches Ende einer Bearbeitungsaufgabe ein Zeitpunkt oder ein Ereignis, wenn für die Arbeitsbaugruppe planmäßig die Möglichkeit besteht, von einem Zustand einer Bearbeitung des Bearbeitungsobjekts in einen Leerlaufzustand oder einen Stillstand überzugehen. Ab dem Übergang in den Leerlaufzustand oder den Stillstand wird erstens eine erheblich geringere Energiemenge für den weiteren Betrieb der Straßenbaumaschine benötigt und kann zweitens Gelegenheit für ein Auffüllen von Energievorräten und Energiespeichern zur Verfügung stehen, sodass sich der Verfügbarkeitsparameter ab dem Übergang der Arbeitsbaugruppe in einen Leerlaufzustand oder einen Stillstand betragsmäßig ändern kann. Mit anderen Worten: die Aussagekraft des momentan von der Steuervorrichtung ermittelten Verfügbarkeitsparameters weist in der Regel nur bis zu dem planmäßigen Leerlaufzustand oder dem Stillstand eine ausreichende Vorhersagesicherheit auf.

Bevorzugt endet die Bearbeitungsaufgabe dann, wenn zusätzlich zur Möglichkeit der Arbeitsbaugruppe, in den Leerlaufzustand oder den Stillstand überzugehen, die weitere Möglichkeit besteht, die verfügbare Energiemenge zu vergrößern, also neue Energieversorgungsvorrichtungen zu erschließen oder bestehende Energieversorgungsvorrichtungen zu regenerieren.

Ein Erschließen neuer Energieversorgungsvorrichtungen kann beispielsweise das Erreichen eines Ortes auf der Baustelle sein, ab oder an welchem ein elektrischer Netzanschluss der Straßenbaumaschine realisierbar ist, wohingegen vor diesem Erreichen eine entsprechende Anschlussmöglichkeit zu weit entfernt ist und daher nicht besteht. Ein Regenerieren einer bestehenden Energieversorgungsvorrichtung kann beispielsweise durch das Laden wenigstens eines Energiespeichers, einschließlich dem Befüllen von Kraftstoff- oder/und Brennstofftanks, oder durch eine Austauschen wenigstens eines Energiespeichers mit einem stärker entladenen Zustand durch Energiespeicher mit einem stärker geladenen Zustand erfolgen.

Der wenigstens eine Funktions-Parameter repräsentiert wenigstens eine Leistungsaufnahme wenigstens einer Funktionsbaugruppe, insbesondere wenigstens der Arbeitsbaugruppe. Die Leistungsaufnahme kann eine aktuelle Leistungsaufnahme während einer aktuellen Bearbeitung oder einer unmittelbar oder innerhalb einer vorbestimmten Zeitspanne zurückliegenden Bearbeitung des Bearbeitungsobjekts sein. Die Leistungsaufnahme kann ein, insbesondere arithmetischer oder geometrischer, Mittelwert sein, welcher über eine zurückliegende Bearbeitungsdauer hinweg ermittelt wurde. Die Leistungsaufnahme kann eine Summe individueller Leistungsaufnahmen unterschiedlicher Funktionsbaugruppen sein, wobei für jede individuelle Leistungsaufnahme das vorstehend zur Leistungsaufnahme Gesagte gilt.

Je nach Ausgestaltung der betrachteten Funktionsbaugruppe kann ihre Leistungsaufnahme sehr genau ermittelt werden. Ist eine Funktionsbaugruppe direkt mit einem elektrischen Antrieb gekoppelt, kann durch die am elektrischen Antrieb abfallende Spannung und den dabei durch den elektrischen Antrieb fließenden Strom unmittelbar die Leistungsaufnahme des elektrischen Antriebs und damit der mit dem elektrischen Antrieb gekoppelten Funktionsbaugruppe ermittelt werden. Im Falle einer unmittelbar durch eine Brennkraftmaschine angetriebenen Arbeitsbaugruppe deren Leistungsaufnahme aus dem Kraftstoffmengenstrom in die Brennkraftmaschine und dem mengenbezogenen Brennwert des Kraftstoffs ermittelt werden, gegebenenfalls unter Berücksichtigung des Wirkungsgrads der Brennkraftmaschine. Damit kann die Leistungsaufnahme retrospektiv oder zu einem aktuellen Bearbeitungszeitpunkt sehr genau ermittelt werden. Solange sich die Umstände der Bearbeitung des Bearbeitungsobjekts nicht oder nur unwesentlich ändern, können die zurückliegenden bekannten Leistungsaufnahmen für die im Wesentlichen gleiche künftige Bearbeitungsaufgabe als Prognose fortgeschrieben werden.

Die Steuervorrichtung kann den Funktions-Parameter als Parameter behandeln, welcher eine künftige Leistungsaufnahme, insbesondere eine künftige Leistungsaufnahme pro Zeit, repräsentiert, sodass die Steuervorrichtung auf Grundlage des Funktions-Parameters und des Verfügbarkeitsparameters eine erzielbare Restbearbeitungsdauer ermitteln kann.

Der wenigstens eine Betriebsparameter der Funktionsanordnung, also wenigstens einer Funktionsbaugruppe derselben, vorzugsweise der energieverbrauchsintensiven Arbeitsbaugruppe, beeinflusst in der Regel die Leistungsaufnahme der Funktionsanordnung bzw. der wenigstens einen Funktionsbaugruppe und damit die Funktions-Parameter und ebenso die Dauer einer Bearbeitungsaufgabe bis zu ihrer Erledigung. Die Betriebsparameter der Funktionsanordnung sind die durch die Steuervorrichtung zur Steuerung der Funktionsanordnung veränderbaren bzw. einstellbaren Parameter.

Da die Straßenbaumaschine als energieintensivste Aufgabe die Bearbeitung des Bearbeitungsobjekts, wie beispielsweise eines Bodenbereichs, hat, ist die Arbeitsbaugruppe dann, wenn sie sich im bodenbearbeitenden Betrieb befindet, in der Regel der größte Energie- und Leistungsverbraucher. Im bevorzugten Fall einer um eine Rotationsachse rotierbaren Abtragsvorrichtung als einem wesentlichen Teil der Arbeitsbaugruppe sind Betriebsparameter, welche die Dauer bis zur Erledigung einer Bearbeitungsaufgabe beeinflussen, eine Drehzahl der Abtragsvorrichtung um die Rotationsachse und eine Eingriffstiefe der Abtragsvorrichtung in das Bearbeitungsobjekt. Ein weiterer für die Bodenbearbeitung wichtiger Betriebsparameter der Funktionsanordnung, jedoch in der Regel der Antriebsanordnung, ist eine Vorschubgeschwindigkeit der Abtragsvorrichtung quer zur Rotationsachse. Diese Betriebsparameter beeinflussen die Funktions-Parameter der Funktionsbaugruppe und insbesondere der Abeitsbaugruppe als energieverbrauchsintensivster Teil der Funktionsanordnung.

Der wenigstens eine Energie-Parameter repräsentiert wenigstens einen Zustandsparameter oder/und wenigstens einen Betriebsparameter wenigstens einer Energieversorgungsvorrichtung. Der Zustandsparameter der wenigstens einen Energieversorgungsvorrichtung ist bevorzugt ein möglichst aktuell erfasster Parameter, welcher wenigstens einen Zustand der wenigstens einen Energieversorgungsvorrichtung angibt, etwa eine alterungsbedingte Wirkungsgradveränderung der wenigstens einen Energieversorgungsvorrichtung, eine die Energieabgabe beeinflussende Temperatur der wenigstens einen Energieversorgungsvorrichtung, eine grundsätzliche Betriebsbereitschaft der wenigstens einen Energieversorgungsvorrichtung usw.

Ein Ladezustand einer Batterie, ein Füllstand eines Tanks und dgl. stellen zwar auch einen Zustand der Energieversorgungsvorrichtung dar. Jedoch wird der verfügbare Energievorrat bereits durch den Verfügbarkeitsparameter berücksichtigt.

Für den wenigstens einen Betriebsparameter der wenigstens einen Energieversorgungsvorrichtung gilt das oben zu dem wenigstens einen Betriebsparameter der Funktionsanordnung Gesagte mutatis mutandis entsprechend. Der Betriebsparameter kann bevorzugt ein aktueller Betriebsparameter der wenigstens einen Energieversorgungsvorrichtung sein. Der Betriebsparameter kann ein über eine gewisse Betriebsdauer hinweg ermittelter Mittelwert eines Betriebsparameters sein, beispielsweise um zeitliche Schwankungen des Betriebsparameters zu nivellieren.

Ein Betriebsparameter kann beispielsweise eine aktuelle zeitliche Energieabgaberate einer Energieversorgungsvorrichtung sein und dergleichen.

Der Energie-Parameter kann so zur Ermittlung des Verfügbarkeitsparameters beitragen.

Der wenigstens eine Bearbeitungsparameter repräsentiert bevorzugt Information über eine noch auszuführende aktuelle oder/und künftige Bearbeitungsaufgabe. Hierzu kann die aus der DE 10 2021 133 306 A1 bekannte Aufwands-Abschätzung herangezogen werden. Ebenso kann der wenigstens eine Bearbeitungsparameter Angaben über das zu bearbeitende Material berücksichtigen, wie beispielsweise seine Härte, Körnigkeit, Abrasivität usw.; ein etwaiger Aufbau, insbesondere Schichtaufbau des Bearbeitungsobjekt und dergleichen sein, um nur einige Beispiele zu nennen.

Beispiele für stärker von der konstruktiven Ausgestaltung einer Arbeitsbaugruppe zur abtragenden Bearbeitung des Bearbeitungsobjekts bestimmte Bearbeitungsparameter sind unter anderem: ein Typ der verwendeten Abtragsvorrichtung; eine körperliche Größe der Abtragsvorrichtung, wie etwa eine Fräsbreite im Falle einer Fräswalze als einer Abtragsvorrichtung; ein Zustand, etwa Verschleißzustand, der Abtragsvorrichtung; ein Typ eines an der Abtragsvorrichtung verwendeten Abtragswerkzeugs; eine Anzahl an Abtragswerkzeugen, etwa Fräsmeißeln, an der Abtragsvorrichtung; eine Anordnung der Abtragswerkzeuge, etwa ein Linienabstand von Fräswerkzeugen, an der Abtragsvorrichtung, usw. Die in der vorhergehenden nicht-abschließenden Aufzählung genannten Bearbeitungsparameter charakterisieren die Arbeitsbaugruppe in ihren für die Bearbeitungsaufgabe hinsichtlich eines Energieverbrauchs relevanten Eigenschaften unabhängig von jeweils gewählten Betriebsarten.

Daneben wird der Energiebedarf der wenigstens einen Funktionsbaugruppe durch aktuell herrschende Betriebsparameter der Funktionsanordnung bestimmt. Beispiele für stärker vom aktuellen Betrieb der Arbeitsbaugruppe zur abtragenden Bearbeitung des Bearbeitungsobjekts bestimmte Betriebsparameter sind eine Drehzahl der Arbeitsvorrichtung während eines Abtragsvorgangs, eine Eingriffstiefe während eines Abtragsvorgangs, eine Vorschubgeschwindigkeit während eines Abtragsvorgangs, ein Drehmoment der Arbeitsvorrichtung, und dergleichen.

Auf Grundlage des Bearbeitungsparameters kann die Steuervorrichtung wenigstens einen Schätzwert ermitteln, wie viel Energie für die Fortsetzung der aktuell auszuführenden oder unmittelbar bevorstehenden Bearbeitungsaufgabe bis zu einem relevanten Meilenstein dieser Bearbeitungsaufgabe benötigt wird. Somit kann die Steuervorrichtung mit hinreichender Vorhersagegenauigkeit ermitteln, wie lange eine verfügbare Energiemenge unter Berücksichtigung der noch bevorstehenden Bearbeitungstätigkeiten ausreicht, d. h. das Restzeitpotential ermitteln. In Kenntnis des wenigstens einen Bearbeitungsparameters kann die Steuervorrichtung den Funktions-Parameter mit guter Vorhersagegenauigkeit in die Zukunft projizieren, etwa weil die Steuervorrichtung aufgrund des wenigstens einen Bearbeitungsparameters z. B. den aktuellen Funktions-Parameter mit hinreichender Präzision in die Zukunft extrapolieren, oder künftig einzustellende Betriebsparameter prognostizieren kann.

Der genannte Meilenstein einer Bearbeitungsaufgabe kann ein Ende der Bearbeitungsaufgabe sein.

Der wenigstens eine Baustellenparameter repräsentiert bevorzugt Information über die Struktur oder/und Organisation der Baustelle, auf der die Straßenbaumaschine zur Durchführung der betrachteten Bearbeitungsaufgabe eingesetzt ist. Durch den Baustellenparameter, welcher als Baustellenstruktur beispielsweise die an der Baustelle zurückzulegenden Rangierwege oder/und die Komplexität einer Bearbeitungsaufgabe berücksichtigt, oder/und welcher als Baustellenorganisation die Verfügbarkeit von mit der Straßenbaumaschine kooperierenden peripheren Maschinen, wie etwa die Verfügbarkeit von Transportkapazitäten für einen Abtransport von von der Straßenbaumaschine produziertem Abraum, berücksichtigt, kann ein auf Grundlage der Struktur oder/und der Organisation der Baustelle erhöhter oder verringerter Aufwand bei der Ausführung einer an sich bekannten Bearbeitungsaufgabe berücksichtigt werden. Der Baustellenparameter kann beispielsweise ein Faktor sein, mit welchem der wenigstens eine Bearbeitungsparameter multipliziert wird.

Der Baustellenparameter kann Information über vorgeschriebene Pausen- und Schichtzeiten, über Wartungsmöglichkeiten hinsichtlich Umfang, Ort und Zeit ihrer Bereitstellung und dgl. enthalten. Somit kann der Baustellenparameter auch der Bestimmung einer Restzeitinformation, insbesondere eines Restzeitkontingents dienen.

Eine zielführende Möglichkeit der Steuervorrichtung, die Funktionsanordnung oder/- und die Energieversorgungsanordnung auf Grundlage wenigstens eines Verfügbarkeitsparameters unter Berücksichtigung einer Restzeitinformation zu steuern liegt gemäß den vorstehenden Ausführungen darin, auf Grundlage des wenigstens einen Verfügbarkeitsparameters ein Restzeitpotential der Funktionsanordnung oder/und der Energieversorgungsanordnung zu ermitteln und erforderlichenfalls wenigstens einen Betriebsparameter der Funktionsanordnung oder/und der Energieversorgungsanordnung so zu verändern, dass das Restzeitpotential nicht kleiner ist, vorzugsweise um wenigstens eine zu wählende oder vorbestimmte Sicherheitsmarge größer ist, als ein der Steuervorrichtung bekanntes oder von der Steuervorrichtung ermitteltes Restzeitkontingent oder/und ein von der Steuerung ermittelter Restzeitbedarf.

Dementsprechend ist die Steuervorrichtung gemäß bevorzugten Weiterbildung der vorliegenden Erfindung dadurch zur Steuerung der Funktionsanordnung oder/und der Energieversorgungsanordnung nach Maßgabe des Verfügbarkeitsparameters ausgebildet, dass die Steuervorrichtung die Funktionsanordnung oder/und die Energieversorgungsanordnung nach Maßgabe eines Vergleichs eines Restzeitpotentials mit einem Restzeitbedarf oder/und mit einem Restzeitkontingent steuert. Insbesondere ist die Steuervorrichtung dazu ausgebildet, die Funktionsanordnung oder/und die Energieversorgungsanordnung nach Maßgabe des Vergleichs derart zu steuern, dass das Restzeitpotential nicht kleiner, vorzugsweise größer, ist als der Restzeitbedarf oder/und das Restzeitkontingent.

Für eine vorteilhaft zielgenaue und effiziente Verwendung der abgebbaren Energiemenge ist die Steuervorrichtung in bevorzugter Weiterbildung der vorliegenden Erfindung dazu ausgebildet, die Funktionsanordnung oder/und die Energieversorgungsanordnung unter Berücksichtigung wenigstens eines Regenerierungsparameters zu steuern, wobei der wenigstens eine Regenerierungsparameter eine in die Energieversorgungsanordnung einspeisbare Energiemenge repräsentiert. Hierfür ist es besonders vorteilhaft, wenn der Steuervorrichtung Daten zugänglich sind, welche Beginn und Ende oder Beginn und Dauer oder Ende und Dauer einer künftigen Betriebsphase der Straßenbaumaschine anzeigen, insbesondere einer Betriebsunterbrechung der Funktionsanordnung, die für eine Bevorratung von Energie nutzbar ist.

Die Steuervorrichtung kann dazu ausgebildet sein, den Regenerierungsparameter zu ermitteln aus wenigstens einem der folgenden Parameter: aus einer zur Verfügung stehenden Regenerierungsdauer, aus einer pro Zeiteinheit in die jeweilige Energieversorgungsvorrichtung einspeisbaren Energiemenge, aus einer für die Regenerierung insgesamt zur Verfügung stehenden Energiemenge und aus einem Umsetzungswirkungsgrad, mit welchem eine an der Straßenbaumaschine in einer Energieform verfügbare Energiemenge in eine für die zu regenerierende Energieversorgungsvorrichtung nutzbare Energieform umsetzbar ist.

So kann beispielsweise in einem für eine Regenerierung zur Verfügung stehenden Zeitraum fossiler Kraftstoff oder Brennstoff einer Brennstoffzelle durch Betrieb eines Generators bzw. durch Betrieb einer Brennstoffzelle in elektrische Energie umgewandelt und in einer Batterie gespeichert werden.

Zusätzlich oder alternativ kann die Steuervorrichtung dazu ausgebildet sein, die Funktionsanordnung oder/und die Energieversorgungsanordnung auf Grundlage einer Restenergiebedarfsinformation zu steuern, wobei die Restenergiebedarfsinformation einen Restenergiebedarf der Straßenbaumaschine für die Erledigung einer Bearbeitungsaufgabe oder das Erreichen eines bestimmbaren oder vorbestimmten Meilensteins einer Bearbeitungsaufgabe repräsentiert.

Während das Restzeitpotential im Grunde unter Berücksichtigung aktueller oder/und geplanter Betriebsparameter eine Umnotierung des Verfügbarkeitsparameters von der Einheit Energie auf die Einheit Zeit darstellt, und auf diese Weise mit einem ebenfalls in der Einheit Zeit notierten Orientierungs- oder Zielparameter, wie etwa Restzeitbedarf oder/und Restzeitkontingent, verglichen werden kann, gestattet die Verwendung einer Restenergiebedarfsinformation einen unmittelbaren Vergleich mit dem Verfügbarkeitsparameter.

Ob eine Steuerung in der Einheit 'Zeit' oder in der Einheit 'Energie' oder in beiden Einheiten erfolgt, hängt vom Einzelfall der jeweils angetroffenen Bearbeitungsaufgabe und ihrer Begleitumstände ab. Sind beispielsweise Betriebsparameter aufgrund unvollständiger Datenlage über die Bearbeitungsaufgabe nur mit großer Unsicherheit prognostizierbar oder spielen zeitliche Beschränkungen bei der Erledigung der Bearbeitungsaufgabe keine oder nur eine untergeordnete Rolle, kann eine Steuerung unmittelbar über Energiegrößen, wie Verfügungsparameter und Restenergiebedarf, angezeigt sein. Ist das Gegenteil der Fall, kann eine Steuerung über Zeitgrößen bevorzugt sein. Als Plausibilitätsprüfung können beide Berechnungsarten verwendet und in ihren Ergebnissen miteinander verglichen werden.

Die Steuervorrichtung ist bevorzugt dazu ausgebildet, die Restenergiebedarfsinformation zu ermitteln. Auf abstrakter Ebene können die gleichen Parameter der Steuervorrichtung für die Ermittlung der Restenergiebedarfsinformation dienen, welche auch zur Ermittlung der Restzeitinformation in Gestalt des Restzeitbedarfs herangezogen werden. Einzelne konkrete physikalische Größen, welche sich jeweils als Funktions-Parameter oder als Betriebsparameter der Funktionsanordnung oder als Energie-Parameter oder als Bearbeitungsparameter oder als Baustellenparameter subsumieren lassen, können sich für die Ermittlung des Restzeitbedarfs einerseits und des Restenergiebedarfs andererseits unterscheiden. Weiterhin können für die Ermittlung des Restzeitbedarfs einerseits und des Restenergiebedarfs andererseits zwar grundsätzlich die gleichen Parameter herangezogen werden, jedoch mit einer unterschiedlichen Gewichtung. So kann für die Ermittlung des Restenergiebedarfs ein stärkerer Schwerpunkt auf den wenigstens einen Energie-Parameter gelegt werden, während für die Ermittlung des Restzeitbedarfs ein stärkerer Schwerpunkt auf den wenigstens einen Bearbeitungsparameter gelegt wird.

Aufgrund des oben Gesagten ist die Steuervorrichtung bevorzugt dazu ausgebildet, die Restenergiebedarfsinformation aus wenigstens einem Energiebedarfs-Parameter zu ermitteln, wobei der wenigstens eine Energiebedarfs-Parameter wenigstens einen der folgenden Parameter umfasst:
- wenigstens einen Funktions-Parameter der Funktionsanordnung,
- wenigstens einen Betriebsparameter der Funktionsanordnung,
- wenigstens einen Energie-Parameter der Energieversorgungsanordnung,
- wenigstens einen Bearbeitungsparameter einer aktuell ausgeführten oder/und künftig auszuführenden Bearbeitungsaufgabe,
- wenigstens einen Baustellenparameter.

Zu den einzelnen Parametern Funktions-Parameter, Betriebsparameter der Funktionsanordnung, Energie-Parameter, Bearbeitungsparameter und Baustellenparameter gilt das oben bereits zu Erläuterung der Ermittlung der Restzeitinformation Gesagte auch für die Ermittlung der Restenergiebedarfsinformation.

Eine zusätzliche oder alternative zielführende Möglichkeit der Steuervorrichtung, die Funktionsanordnung oder/und die Energieversorgungsanordnung auf Grundlage wenigstens eines Verfügbarkeitsparameters unter Berücksichtigung einer Restenergiebedarfsinformation zu steuern, liegt gemäß den vorstehenden Ausführungen darin, auf Grundlage des wenigstens einen Verfügbarkeitsparameters wenigstens einen Betriebsparameter der Funktionsanordnung oder/und der Energieversorgungsanordnung so zu verändern, dass die verfügbare an die Funktionsanordnung abgebbare Energiemenge nicht kleiner ist, vorzugsweise um wenigstens eine zu wählende oder vorbestimmte Sicherheitsmarge größer ist, als der der Steuervorrichtung bekannte oder von der Steuervorrichtung ermittelte Restenergiebedarf bis zur Erledigung einer Bearbeitungsaufgabe oder bis zum Erreichen eines Meilensteins derselben.

Es bestehen in der Regel stets konkurrierende Ziele in der Erledigung einer Bearbeitungsaufgabe, wie zum Beispiel ihrer möglichst schnellen Erledigung einerseits und ihrer möglichst ressourcenschonenden, insbesondere energieeffizienten, Erledigung andererseits. Dabei geht die Erfüllung eines Ziels stets zulasten der Erfüllung des jeweils anderen Ziels. Die vorliegend beschriebene Ausbildung der Steuervorrichtung, die Funktionsanordnung oder/und die Energieversorgungsanordnung auf Grundlage wenigstens eines Verfügbarkeitsparameters zu steuern, gestattet der Steuervorrichtung in einem bevorzugten Aspekt der Erfindung, die Betriebseinstellung der Funktionsanordnung hinsichtlich Dauer der Bearbeitung bis zur Erledigung der Bearbeitungsaufgabe und der dafür aufgewendeten Energiemenge während der Bearbeitung zugunsten des einen oder des anderen Ziels zu verändern, um einen Meilenstein der Bearbeitungsaufgabe mit möglichst hoher Produktivität, beispielsweise ohne unerwünschten Stillstand der Straßenbaumaschine oder/und der mit ihr kooperierenden Infrastruktur, sicher zu erreichen.

Wie bereits eingangs dargelegt wurde, entfaltet die vorliegende Erfindung ihre Wirkung besonders dann, wenn an der Straßenbaumaschine mehrere Energieversorgungsvorrichtungen vorgesehen sind, von welchen jede zur Abgabe von Energie an die Funktionsanordnung für deren Betrieb ausgebildet ist. Daher betrifft eine bevorzugte Weiterbildung der vorliegenden Erfindung den Fall, dass die Funktionsanordnung Energie einer vorbestimmten Energieform benötigt, wobei die Energieversorgungsanordnung als eine Mehrzahl von Energieversorgungsvorrichtungen entweder
a) eine Mehrzahl von unterschiedlichen Energiespeichern umfasst, von welchen jeder Energie in der vorbestimmten Energieform bereitstellt, oder
b) eine Mehrzahl von unterschiedlichen Energiewandlern umfasst, welche jeweils auf Grundlage unterschiedlicher physikalischer Wirkprinzipien Energie, die in einer von der vorbestimmten Energieform abweichenden Energieform bereitgestellt ist, in die vorbestimmte Energieform umwandeln, oder
c) wenigstens einen Energiespeicher gemäß a) und wenigstens einen Energiewandler gemäß b) aufweist.

Eine elektrische Netzversorgung wird in diesem Zusammenhang im Rahmen der vorliegenden Anmeldung als Energiespeicher angesehen. Aus der Perspektive der Straßenbaumaschine und ihrer Steuervorrichtung ist eine Netzversorgung ein Speicher für elektrische Energie mit quasi-unendlich großer Kapazität, der allerdings, wie jeder andere elektrische Energiespeicher auch, elektrische Energie nur in pro Zeiteinheit endlichen Mengen an die Straßenbaumaschine und damit an die Funktionsanordnung abgeben kann. Deshalb kann auch ein Netzanschluss eine kurzfristig benötigte Spitzenlast trotz seiner quasi-unendlich großen Kapazität unter Umständen nicht vollständig abdecken.

Mit "quasi-unendlich großer Kapazität" soll zum Ausdruck gebracht sein, dass selbstverständlich auch die Kapazität eines Netzanschlusses in Wirklichkeit nur endlich groß ist, die Grenze dieser Kapazität an elektrischer Ladung jedoch für die Zwecke der hier diskutierten Straßenbaumaschine in der Praxis nicht ausgeschöpft werden kann. Es können allerdings technische oder vertragliche Beschränkungen bestehen, aus einem Netzanschluss in einer vorbestimmten Zeit nur eine vorbestimmte begrenzte Menge an elektrischer Energie abzurufen, um elektrische Leitungen der Straßenbaumaschine oder/und das speisende öffentliche Netz nicht zu überlasten.

Im Falle der Anordnung mehrerer Energieversorgungsvorrichtungen, insbesondere mehrerer Energieversorgungsvorrichtungen zur Bereitstellung der vorbestimmten Energieform, ist es vorteilhaft, wenn der wenigstens eine Verfügbarkeitsparameter für jede Energieversorgungsvorrichtung aus wenigstens zwei Energieversorgungsvorrichtungen aus der Mehrzahl von Energieversorgungsvorrichtungen jeweils einen vorrichtungsbezogenen Verfügbarkeitsparameter aufweist, welcher die durch die jeweilige Energieversorgungsvorrichtung verfügbare Energiemenge repräsentiert. Für einen vorrichtungsbezogenen Verfügbarkeitsparameter gilt das oben zum Verfügbarkeitsparameter Gesagte.

Durch den vorrichtungsbezogenen Verfügbarkeitsparameter ist es möglich, die einzelnen Energieversorgungsvorrichtungen aus der Mehrzahl von Energieversorgungsvorrichtungen hinsichtlich ihres Energieabgabevermögens zu unterscheiden und unter Berücksichtigung ihres Energieabgabevermögens in Steuerungsentscheidungen über die Abgabe an Energie an die Funktionsanordnung einzubeziehen.

Die Steuervorrichtung ist bevorzugt dazu ausgebildet, die Funktionsanordnung oder/und die Energieversorgungsanordnung auf Grundlage der vorrichtungsbezogenen Verfügbarkeitsparameter zu steuern. Damit ist eine stärker nach unterschiedlichen Energieversorgungsvorrichtungen differenzierte Steuerung der Funktionsanordnung oder/und die Energieversorgungsanordnung und in der Folge ein verbessertes des Energiemanagements und somit eine noch bessere Ausnutzung der an einzelnen Energieversorgungsvorrichtungen zur Verfügung stehenden Energiemengen möglich.

Um die Straßenbaumaschine nach Maßgabe des Verfügbarkeitsparameters und damit nach Maßgabe der zur Verfügung stehenden Energiemenge, sei es als kumulative Energiemengensumme oder/und sei es als individuelle zur Verfügung stehende Energiemengen unterschiedlicher Energieversorgungsvorrichtungen der Energieversorgungsanordnung zu steuern und damit dafür zu sorgen, dass die verfügbare Energiemenge, gegebenenfalls in einer zur Verfügung stehenden Restbetriebsdauer, wirksam und effizient an die Funktionsanordnung abgegeben wird, kann die Steuervorrichtung dazu ausgebildet sein, eine Leistungsaufnahme wenigstens einer Funktionsbaugruppe oder/und eine Energieabgabe wenigstens einer Energieversorgungsvorrichtung mengenmäßig zu beschränken.

So kann die Steuervorrichtung, wie oben bereits allgemein ausgeführt wurde, beispielsweise dafür sorgen, dass die Straßenbaumaschine unter Ausschöpfung des Restzeitpotentials bis zu einem vorbestimmten Zeitpunkt nutzbar ist, zu dem ohnehin eine Betriebspause eingelegt werden muss, etwa weil Werkzeuge der Arbeitsbaugruppe überprüft, getauscht oder repariert werden müssen oder weil mit der Straßenbaumaschine kooperierende Maschinen der Baustelle, wie beispielsweise Transportfahrzeuge und dergleichen, nur bis zu dem vorbestimmten Zeitpunkt zur Verfügung stehen und ohne die kooperierenden Maschinen ein weiterer Betrieb der Straßenbaumaschine nicht möglich ist, oder weil Betriebsstoffe, die keine Energieträger der Energieversorgungsanordnung sind, wie etwa Wasser, an der Straßenbaumaschine nachgefasst werden müssen oder weil der Maschinenführer eine aus Sicherheitsgründen vorgeschriebene Pause einlegen muss. Ein vorzeitiger Stillstand der Straßenbaumaschine aus Gründen mangelnder Betriebsenergie kann so vermieden werden. Die Ablaufplanung der Baustelle, von welcher weitere Maschineneinsätze über die Straßenbaumaschine hinaus abhängig sind, kann so eingehalten werden.

So kann die Steuervorrichtung die Leistungsaufnahme und damit die Arbeitsleistung der Arbeitsbaugruppe oder einer anderen Funktionsbaugruppe reduzieren, um die verfügbare Energiemenge über einen längeren Zeitraum als ohne die Reduzierung nutzen zu können, bis wenigstens eine Energieversorgungsvorrichtung planmäßig erschlossen oder planmäßig regeneriert werden kann. Zusätzlich oder alternativ kann die Steuervorrichtung eine Energieabgabe wenigstens einer Energieversorgungsvorrichtung an die Funktionsanordnung reduzieren, um die gleiche Wirkung zu erzielen.

Zusätzlich oder alternativ zur vorstehend beschriebenen Verringerung der durch die Funktionsanordnung nutzbaren Energiemenge kann die Steuervorrichtung dazu ausgebildet sein, eine Energieabgabe von Energie in der vorbestimmten Energieform durch eine Mehrzahl von Energieversorgungsvorrichtungen zu kombinieren. So kann die Steuervorrichtung eine oder mehrere Funktionsbaugruppen der Funktionsanordnung aus mehr als einer Energieversorgungsvorrichtung mit der Energie der vorbestimmten Energieform versorgen, um für die Erfüllung einer Bearbeitungsaufgabe bis zu einem vorgegebenen Stichzeitpunkt zu sorgen, vorausgesetzt die in der Energieversorgungsanordnung verfügbare Energiemenge der vorbestimmten Energieform reicht, gegebenenfalls unter Berücksichtigung weiterer Randbedingungen, wie etwa einer Regenerierungsfähigkeit, für die Erfüllung dieser Aufgabe aus.

Bevorzugt ist die vorbestimmte Energieform elektrische Energie, welche durch unterschiedliche Energiespeicher gespeichert und durch unterschiedliche Energiewandler bereitgestellt werden kann. Energiespeicher zur Bereitstellung elektrischer Energie können wenigstens eine Batterie oder ein Netzanschluss sein. Energiewandler zur Bereitstellung elektrischer Energie kann wenigstens eine Brennstoffzelle oder wenigstens ein durch ein Antriebsaggregat angetriebener Generator sein.

Mit "Batterie" ist dabei in der vorliegenden Anmeldung, wie für Fahrzeuge üblich, eine aufladbare Batterie bezeichnet. Mit "Brennstoffzelle" ist wenigstens eine Brennstoffzelle bzw. wenigstens ein Brennstoffzellenstapel bezeichnet.

Die Energieversorgungsanordnung umfasst daher bevorzugt wenigstens zwei der folgenden Energieversorgungsvorrichtungen:
- eine Batterie,
- einen Netzanschluss,
- eine Brennstoffzelle,
- einen Generator.

In der Regel weist jede selbstfahrende Straßenbaumaschine, und damit ihre Energieversorgungsanordnung, unabhängig von der Antriebsart ihres Fahrantriebs eine aufladbare Batterie als eine Energieversorgungsvorrichtung auf.

Bevorzugt weist die Energieversorgungsanordnung der Straßenbaumaschine zur Sicherstellung ihrer Versorgung mit einer ausreichenden Menge an elektrischer Energie wenigstens eine der weiteren Energieversorgungsvorrichtungen auf:
- eine Brennstoffzelle,
- einen Netzanschluss,
- einen Generator.

Die wenigstens eine weitere Energieversorgungsvorrichtung ist dabei bevorzugt nicht nur zur Energieabgabe an die Funktionsanordnung, sondern auch zur Energieabgabe an die aufladbare Batterie ausgebildet. So kann die Batterie durch bordeigene Energieversorgungsvorrichtungen wieder aufgeladen werden.

Um den Raumbedarf der Straßenbaumaschine nicht übermäßig anwachsen zu lassen, ist nämlich die Energieversorgungsanordnung unter Berücksichtigung der ebenfalls vorhandenen Funktionsanordnung bevorzugt so ausgelegt, dass die bei einer Bearbeitungsaufgabe der Funktionsanordnung zu erwartende Maximallast oder/und die von der Funktionsanordnung kurzfristig leistbare Maximalleistung nur durch gleichzeitige Energieabgabe von wenigstens zwei Energieversorgungsvorrichtungen der Energieversorgungsanordnung realisierbar ist. Mit anderen Worten: die maximal abgebbare Leistung jeder Energieversorgungsvorrichtung ist kleiner als die kurzzeitig abgebbare maximale Nennleistung der Funktionsanordnung. Insbesondere in dieser Konfiguration kann die Umwandlung einer vorhandenen nicht-elektrischen Energieform in elektrische Energie zur Regenerierung der Batterie sinnvoll sein, um sicherzustellen, dass die Funktionsanordnung nach der Regenerierung der Batterie nicht nur eine mittlere Dauer-Nennleistung, sondern auch eine die mittlere Dauer-Nennleistung übersteigende, insbesondere um wenigstens 30 % deutlich übersteigende, kurzzeitige Maximal-Nennleistung abrufen kann.

Darüber hinaus kann eine Energieversorgungsvorrichtung, insbesondere eine Brennstoffzelle, vorzugsweise unter im Wesentlichen zeitlich konstanter Dauerlast Leistung an einem vorteilhaften Betriebspunkt abgeben. Der Betriebspunkt kann als Dauerlast-Betriebspunkt im Bereich eines Energieeffizienz-Maximums, etwa im Bereich eines maximalen Wirkungsgrads, gelegen sein. Bezogen auf die am vorteilhaften Betriebspunkt durch die Energieversorgungsvorrichtung lieferbare Leistung kann der Bereich bei 80 %, optional bei 85 %, der am vorteilhaften Betriebspunkt lieferbaren Leistung beginnen und bei 120 %, optional bei 115 %, der am vorteilhaften Betriebspunkt lieferbaren Leistung enden. Die in diesem vorteilhaften Leistungsbereich abgebbare Leistung kann zu wenigstens 40 % der Dauer der Bearbeitung des Bearbeitungsobjekts unter der für die Bearbeitung des Bearbeitungsobjekts benötigten Leistung liegen, so dass über wenigstens 40 % der Dauer der Bearbeitung des Bearbeitungsobjekts zwei Energieversorgungsvorrichtungen benötigt werden, um die für die Bearbeitung des Bearbeitungsobjekts benötigte Leistung aufzubringen.

Bevorzugt ist die Steuervorrichtung dazu ausgebildet, die Abgabe an Energie durch die wenigstens eine weitere Energieversorgungsvorrichtung an die aufladbare Batterie zu steuern, um die aufladbare Batterie zu laden. So kann die Steuervorrichtung abhängig anhand des Verfügbarkeitsparameters, gegebenenfalls unter weiterer Berücksichtigung der wenigstens einen Restzeitinformation, insbesondere Restzeitpotential, oder/und der Restenergiebedarfsinformation, elektrische Energie der wenigstens einen weiteren Energieversorgungsvorrichtung entweder der Funktionsanordnung oder der Batterie oder gegebenenfalls der Funktionsanordnung und der Batterie in einem durch die Steuervorrichtung ermittelten Teilungsverhältnis zuführen.

Grundsätzlich kann die Straßenbaumaschine eine beliebige Straßenbaumaschine sein. Bevorzugt ist vorliegend an eine materialabtragende Straßenbaumaschine gedacht, sodass die Arbeitsbaugruppe bevorzugt eine um eine Fräsachse rotierbare Fräswalze umfasst. Die Straßenbaumaschine kann folglich eine Straßenfräse oder ein Surface-Miner oder ein Recycler oder ein Stabilisierer sein.

Die vorliegende Erfindung wird nachfolgend anhand der beiliegenden Zeichnungen näher erläutert werden. Es stellt dar:

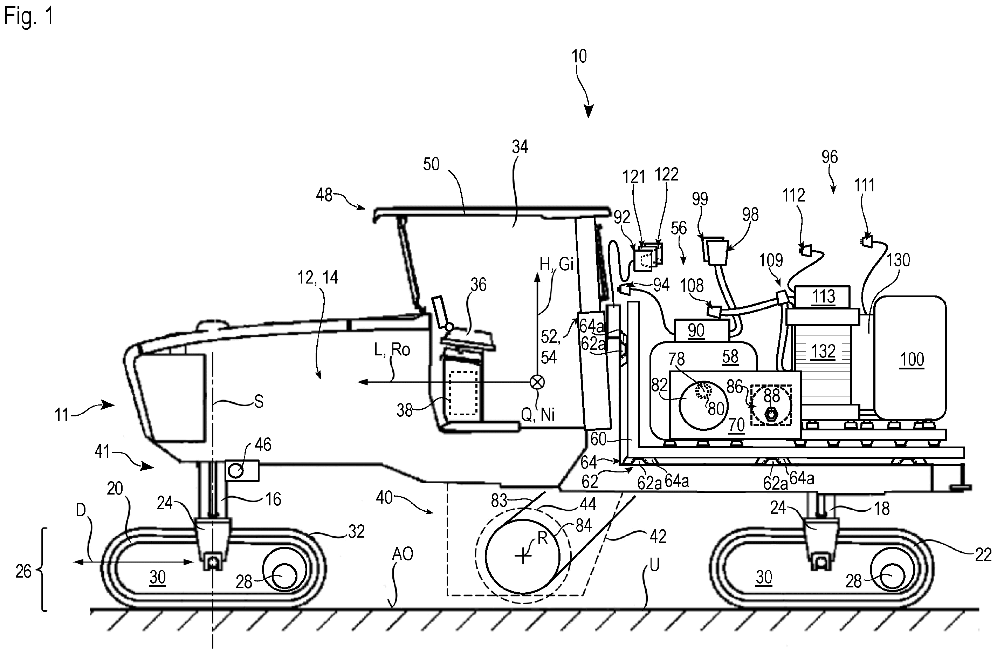

- Fig. 1: eine grobschematische Seitenansicht einer Ausführungsform einer erfindungsgemäßen selbstfahrenden Straßenbaumaschine,

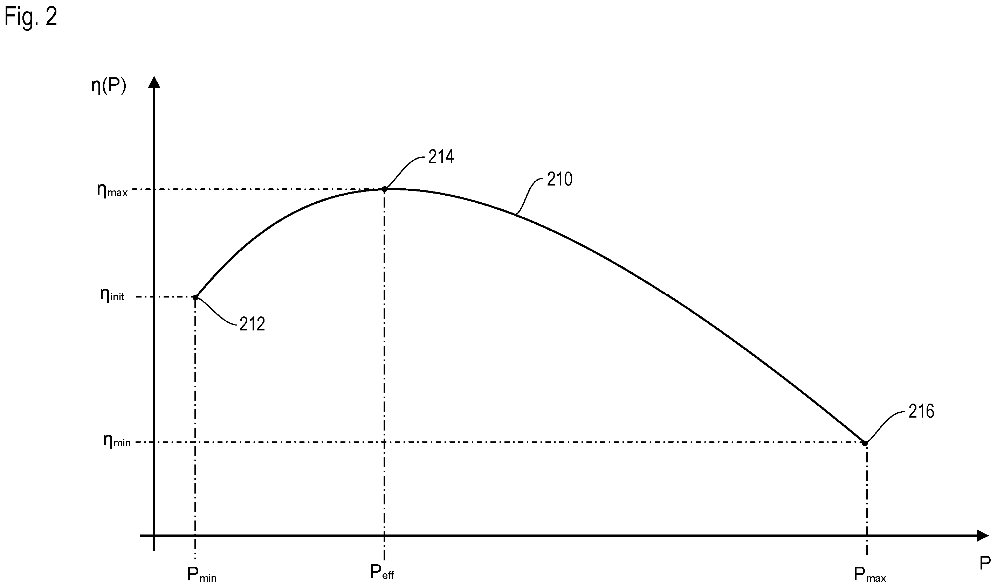

- Fig. 2: eine Kennlinie der Brennstoffzelle in der Straßenbaumaschine von Fig. 1, welche grobschematisch den Wirkungsgrad der Brennstoffzelle in Abhängigkeit ihrer Leistungsabgabe zeigt,

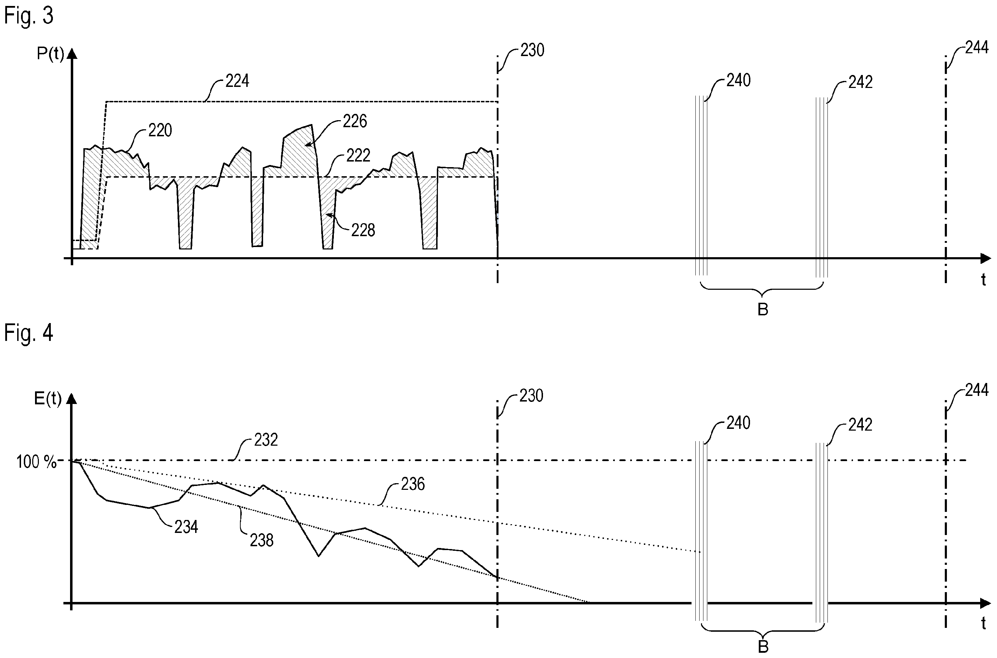

- Fig. 3: ein Diagramm, welches grobschematisch die Leistungsabgabe der Energieversorgungsvorrichtung der Straßenbaumaschine von Fig. 1 während einer bestimmungsgemäßen Bodenbearbeitung durch eine Straßenbaumaschine von Fig. 1 mit herkömmlicher Steuervorrichtung vom Beginn der Bodenbearbeitung bis zu einem aktuellen Zeitpunkt zeigt,
- Fig. 4: ein Diagramm, welches grobschematisch den Ladezustand des Akkumulators und den verbleibenden Betriebsstoffvorrat für den Betrieb der Brennstoffzelle der Straßenbaumaschine mit herkömmlicher Steuervorrichtung von Fig. 1 im Verlauf der Bodenbearbeitung zeigt,

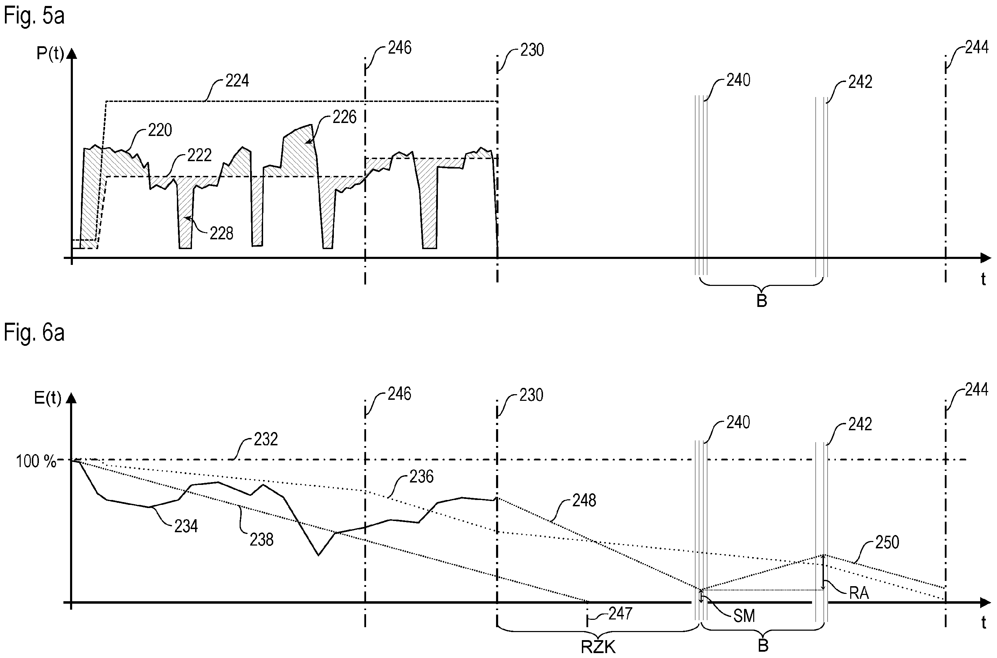

- Fig. 5a: ein Diagramm, welches grobschematisch die Leistungsabgabe der Energieversorgungsvorrichtung der Straßenbaumaschine von Fig. 1 während derselben bestimmungsgemäßen Bodenbearbeitung durch eine Straßenbaumaschine von Fig. 1 mit erfindungsgemäß ausgebildeter Steuervorrichtung, welche die Steuerung der Energieversorgungsanordnung ändert, vom Beginn der Bodenbearbeitung bis zu einem aktuellen Zeitpunkt zeigt,

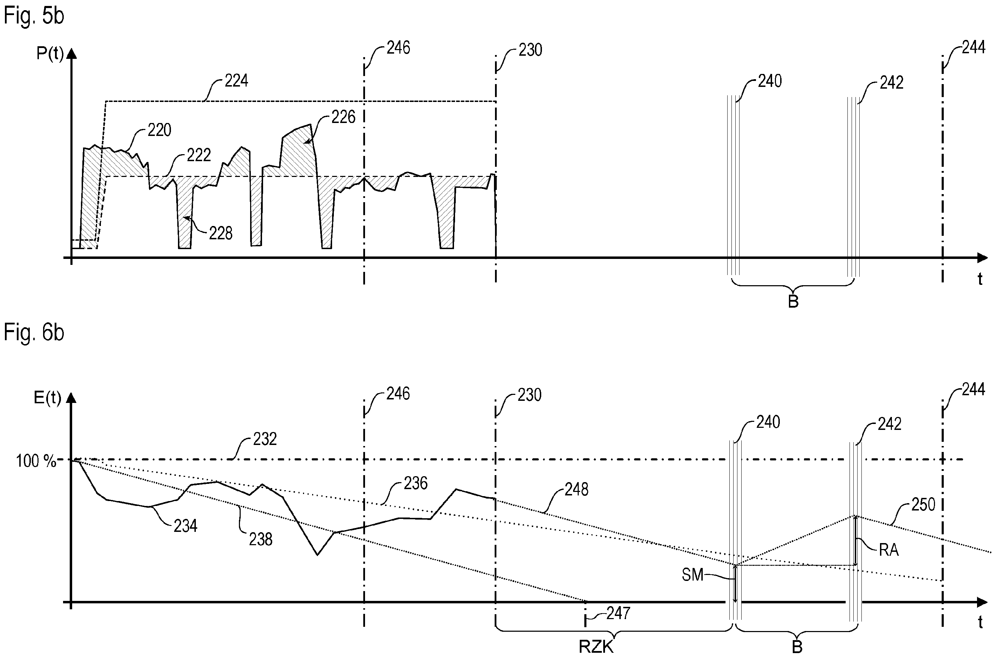

- Fig. 5b: ein alternatives Diagramm, welches grobschematisch die Leistungsabgabe der Energieversorgungsvorrichtung der Straßenbaumaschine von Fig. 1 während derselben bestimmungsgemäßen Bodenbearbeitung durch eine Straßenbaumaschine von Fig. 1 mit erfindungsgemäß ausgebildeter Steuervorrichtung, welche die Steuerung der Funktionsanordnung ändert, vom Beginn der Bodenbearbeitung bis zu einem aktuellen Zeitpunkt zeigt,
- Fig. 6a: ein Diagramm, welches grobschematisch den Ladezustand des Akkumulators und den verbleibenden Betriebsstoffvorrat für den Betrieb der Brennstoffzelle der Straßenbaumaschine mit erfindungsgemäß ausgebildeter Steuervorrichtung gemäß dem Steuerungseingriff von Fig. 5a im Verlauf der Bodenbearbeitung zeigt,
- Fig. 6b: ein Diagramm, welches grobschematisch den Ladezustand des Akkumulators und den verbleibenden Betriebsstoffvorrat für den Betrieb der Brenn- stoffzelle der Straßenbaumaschine mit erfindungsgemäß ausgebildeter Steuervorrichtung gemäß dem Steuerungseingriff von Fig. 5b im Verlauf der Bodenbearbeitung zeigt,

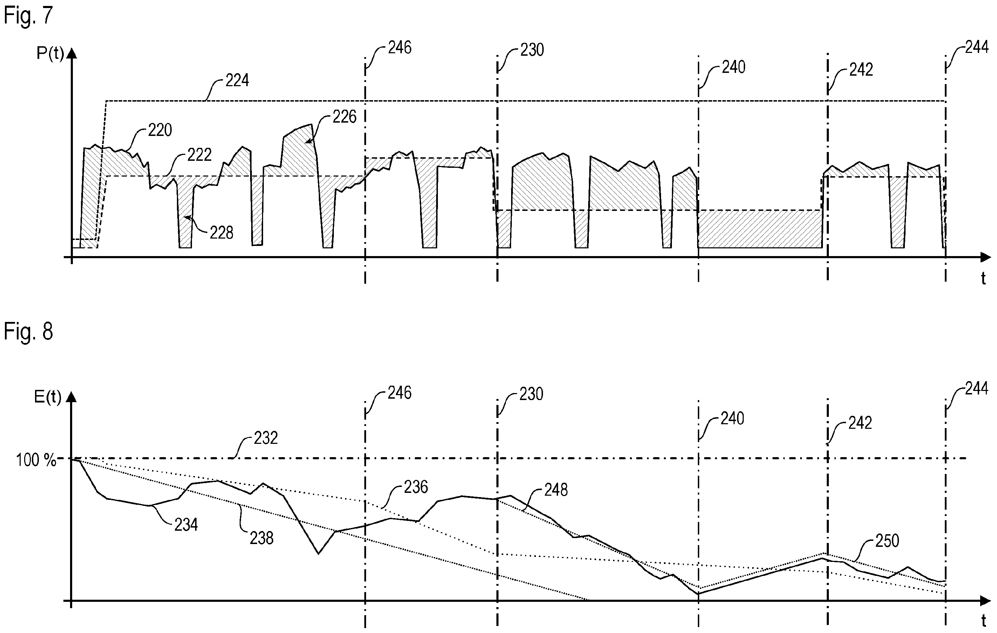

- Fig. 7: ein Diagramm, welches grobschematisch den Verlauf der Leistungsabgabe der Energieversorgungsvorrichtung der Straßenbaumaschine von Fig. 1 während der gesamten bestimmungsgemäßen Bodenbearbeitung durch eine Straßenbaumaschine von Fig. 1 mit erfindungsgemäß ausgebildeter Steuervorrichtung gemäß dem Steuerungseingriff von Fig. 5a zeigt, und
- Fig. 8: ein Diagramm, welches grobschematisch den Verlauf des Ladezustands des Akkumulators und den Verlauf des Betriebsstoffvorrats für den Betrieb der Brennstoffzelle der Straßenbaumaschine mit erfindungsgemäß ausgebildeter Steuervorrichtung von Fig. 1 für die gesamte bestimmungsgemäße Bodenbearbeitung gemäß dem Steuerungseingriff von Fig. 5a zeigt,

### Die Figuren sind nicht maßstäblich.

Der Betrachter von Figur 1 blickt auf eine Bodenbearbeitungsmaschine bzw. Straßenbaumaschine 10 oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängsrichtung L und zur Maschinenquerrichtung Q. Die Pfeilspitze der Maschinenlängsrichtung L in Figur 1 weist in Vorwärtsrichtung. Die Maschinenhöhenrichtung H verläuft parallel zur Gierachse Gi der Maschine 10, die Maschinenlängsrichtung L verläuft parallel zur Rollachse Ro und die Maschinenquerrichtung Q verläuft parallel zur Nickachse Ni.

Die selbstfahrende Straßenbaumaschine 10 umfasst eine Rumpf-Straßenbaumaschine 11 als eine Maschinenbasis.

Die Rumpf-Straßenbaumaschine 11 umfasst einen Maschinenrahmen 12, welcher das Grundgerüst für einen Maschinenkörper 14 bildet. Der Maschinenkörper 14 umfasst den Maschinenrahmen 12 und mit dem Maschinenrahmen 12 verbundene, gegebenenfalls relativ zu diesem bewegliche Bauteile der Maschine 10 und der Rumpf-Straßenbaumaschine 11.

Der Maschinenkörper 14, dessen Bauteileanzahl während der Montage der selbstfahrenden Straßenbaumaschine 10 wächst, umfasst an der Rumpf-Straßenbaumaschine 11 vordere hydraulische Hubsäulen 16 und hintere hydraulische Hubsäulen 18, welche an ihrem einen Endbereich, etwa mit einem Zylinder, mit dem Maschinenrahmen 12 und mit ihrem anderen Endbereich, etwa mit einer aus dem Zylinder aus- und in diesen einfahrenden Kolbenstange, mit vorderen Laufwerken 20 bzw. mit hinteren Laufwerken 22 verbunden sind.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 16 bzw. 18 mit jeweils einem damit verbundenen Laufwerk 20 bzw. 22 aufweist. Die vorderen Hubsäulen 16 sind ebenso wie die hinteren Hubsäulen 18 in weiterhin an sich bekannter Weise jeweils mittels einer Laufwerk-Verbindungsstruktur 24, etwa einer das jeweilige Laufwerk 20 bzw. 22 in Maschinenquerrichtung Q übergreifenden Verbindungsgabel, mit den Laufwerken 20 bzw. 22 gekoppelt.

Die Laufwerke 20 und 22 sind beispielhaft als Kettenlaufwerke dargestellt. Sie sind im dargestellten Ausführungsbeispiel im Wesentlichen identisch aufgebaut und bilden das Fahrwerk 26 der Maschine 10 sowie der Rumpf-Straßenbaumaschine 11. Einzelne oder alle Laufwerke 20 oder/und 22 können abweichend hiervon auch Radlaufwerke sein. Jedes der Laufwerke 20 und 22 ist motorisch angetrieben, im dargestellten Ausführungsbeispiel durch einen Hydromotor 28.

Das Laufwerk 20 und das Laufwerk 22 mit durch den Doppelpfeil D angedeuteten möglichen Fahrtrichtungen weisen im dargestellten Ausführungsbeispiel jeweils eine radial innere Aufnahme- und Führungsstruktur 30 auf, an der eine umlaufbare Laufkette 32 (nur am vorderen Laufwerk 20 beschriftet) angeordnet und zur Umlaufbewegung geführt ist. Die innere Führungsstruktur ist um eine zur Nickachse Ni parallele Kippachse kippbar mit der Laufwerk-Verbindungsstruktur 24 verbunden.

Der Abstand des Maschinenrahmens 12 von den Laufwerken 20 und 22 sowie von einer Aufstandsoberfläche AO eines Untergrunds U, auf welchem die Maschine 10 mit seinem Fahrwerk 26 aufsteht, ist durch die hydraulischen Hubsäulen 16 und 18 veränderbar.

Die Straßenbaumaschine 10 bzw. die Rumpf-Straßenbaumaschine 11 weist einen Fahrstand 34 auf, von dem aus ein Maschinenführer über ein Bedienpult 36 mit einer darin aufgenommenen Steuereinrichtung 38 die Maschine 10 steuernd bedienen kann.

Unter dem Maschinenrahmen 12 ist eine Arbeitseinrichtung 40 als Funktionsbaugruppe einer Funktionsanordnung 41 angeordnet, hier beispielhaft als Fräseinrichtung 40 mit einer in einem Fräswalzenkasten 42 aufgenommenen Fräswalze 44 als einem Arbeitswerkzeug der Arbeitseinrichtung 40. Die Fräswalze 44 ist um eine in Maschinenquerrichtung Q verlaufende Fräsachse R rotierbar, um damit während einer Bodenbearbeitung Untergrundmaterial ausgehend von der Aufstandsoberfläche AO des Untergrunds U mit einer durch die relative Höhenlage des Maschinenrahmens 12 über der Aufstandsoberfläche AO bestimmten Frästiefe abtragen zu können. Die Höhenverstellbarkeit des Maschinenrahmens 12 durch die Hubsäulen 16 und 18 dient folglich auch der Einstellung der Fräs- oder allgemein Eingriffs- bzw. Arbeitstiefe der Maschine 10 bei der Bodenbearbeitung. Alternativ oder zusätzlich kann die Fräswalze 44 relativ zum Maschinenrahmen 12 höhenverstellbar an diesem aufgenommen sein.

Für die in Figur 1 dargestellte Straßen-Großfräse ist die Anordnung der Fräseinrichtung 40 in Maschinenlängsrichtung L zwischen den vorderen und den hinteren Laufwerken 20 bzw. 22 typisch. Derartige Großfräsen sowie bodenabtragende Maschinen im Allgemeinen können ein Transportband aufweisen, etwa am vorderen Längsende im Bereich des Bezugszeichens 11, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

Die Hubsäule 16 und mit ihr das Laufwerk 20 ist durch eine nur grobschematisch angedeutete hydraulische Lenkeinrichtung 46 um eine Lenkachse S drehbar. Bevorzugt zusätzlich, aber auch alternativ, kann die hintere Hubsäule 18 und mit ihr das Laufwerk 22 durch eine Lenkvorrichtung um eine zur Lenkachse S parallele Lenkachse drehbar sein.

Der Fahrstand 34 ist von einem Schutzdachaufbau 48 bedeckt, welcher ein Schutzdach 50 umfasst. Das Schutzdach 50 ist mittels einer Bewegungsführung 52 und eines hydraulischen Bewegungsantriebs 54 heb- und senkbar am Maschinenrahmen 12 angeordnet. In Figur 1 ist das Schutzdach 50 in seiner angehobenen Betriebsstellung gezeigt, in welcher die Maschine 10 für einen Bodenbearbeitungsbetrieb bereit ist.

Die Hydromotoren 28, die Steuereinrichtung 38, die hydraulische Lenkeinrichtung 46, die Hubsäulen 16 und 18 und der hydraulische Bewegungsantrieb 54 des Schutzdachaufbaus 48 sind jeweils weitere Funktionsbaugruppen der Funktionsanordnung 41.

An der Rumpf-Straßenbaumaschine 11 ist zur Bildung der Straßenbaumaschine 10 eine Kraftanordnung 56 als ein zentrales Kraftwerk der Maschine 10 angeordnet. Die Kraftanordnung 56 stellt im Wesentlichen die gesamte Arbeitsleistung der Maschine 10 bereit.

Die Kraftanordnung 56 umfasst einen Elektromotor 58 als Krafteinrichtung und umfasst eine Trageinrichtung 60 zur Verbindung der Kraftanordnung 56 als austauschbares Modul mit der Rumpf-Straßenbaumaschine 11.

Eine Ausgangswelle 78 des Elektromotors 58 bildet eine Arbeitsenergie-Gegenschnittstelle des Elektromotors 58 und damit der Kraftanordnung 56. Die Ausgangswelle 78 ist mit einer Eingangsnabe 80 eines Pumpenverteilergetriebes 70 drehmomentübertragend verbunden.

Das Pumpenverteilergetriebe 70 weist als einen mechanischen Abtrieb eine Riemenscheibe 82 auf, welche durch einen in Figur 1 nur angedeuteten Treibriemen 83 mit einer mit der Fräswalze 44 drehmomentübertragend gekoppelten Riemenscheibe 84 als einer Arbeitsenergie-Schnittstelle zu einem Riementrieb vervollständigt sein kann. Zwischen der fräswalzenseitigen Riemenscheibe 84 und der Fräswalze 44 kann, je nach Bedarf, ein Übersetzungsgetriebe, ein Untersetzungsgetriebe oder kein weiteres Getriebe angeordnet sein. Da die getriebeseitige Riemenscheibe 82 die für die Arbeit der Fräseinrichtung 40 notwendige Arbeitsenergie übertragt, bildet die getriebeseitige Riemenscheibe 82 den Hauptabtrieb des Pumpenverteilergetriebes 70.

Alternativ zum Fräswalzenantrieb über einen Riementrieb kann die Fräswalze auch unmittelbar durch einen oder mehrere Elektromotoren angetrieben werden. Alternativ oder zusätzlich kann auch ein gesonderter Elektromotor zum Antrieb der im Pumpenverteilergetriebe angeordneten Hydraulikpumpen vorgesehen sein.

An einem weiteren Abtrieb, genauer an einem Nebenabtrieb, des Pumpenverteilergetriebes 70 ist eine Hydraulikpumpe 86 angeordnet, welche während ihres Betriebs Hydraulikflüssigkeit mit einem erhöhten Druckniveau als fluidische Arbeitsenergie an einer Schnellkupplungs-Formation 88 als einer Kopplungsformation ausgibt. Die fluidische Arbeitsenergie der Hydraulikpumpe 86 kann von den Hydromotoren 28 für den Vortrieb der Straßenbaumaschine 10 oder/und vom hydraulischen Bewegungsantrieb 54 des Schutzdachaufbaus 48 für ein Anheben und Absenken des Schutzdaches 50 oder/und von der Lenkeinrichtung 46 für eine Lenkbetätigung der vorderen Hubsäulen 16 oder/und der hinteren Hubsäulen 18 genutzt werden. Durch die Hydraulikpumpe 86 kann über die Schnellkupplungs-Formation 88 eine an der Straßenbaumaschine 10 vorhandene Hydraulikflüssigkeitsmenge auf ein erhöhtes Druckniveau gehoben werden.

Der Elektromotor 58 weist in dargestellten Ausführungsbeispiel eine eigene Motorsteuerung 90 auf, welche im Betrieb eine der Steuereinrichtung 38 untergeordnete Komponentensteuereinrichtung bildet. Zur Verbindung der Motorsteuerung 90 mit der Steuereinrichtung 38 der Rumpf-Straßenbaumaschine 11 bzw. der Straßenbaumaschine 10 weist die Rumpf-Straßenbaumaschine 11 eine erste Signal-Schnittstelle 92 auf, mit welcher eine erste Signal-Gegenschnittstelle 94 des Elektromotors 58 daten- und signalübertragend koppelbar ist. Eine Schnittstelle aus der ersten Signal-Schnittstelle 92 und der ersten Signal-Gegenschnittstelle 94 kann einen Stecker und die jeweils andere Schnittstelle kann eine passende Buchse umfassen.

Als elektrische Kraftanordnung 56 benötigt die Kraftanordnung 56 Betriebsenergie in elektrischer Energieform. Zu diesem Zweck ist eine Energieversorgungsanordnung 96 vorgesehen, welche unter anderem einen Akkumulator 130 als einen Energiespeicher aufweist. Elektrische Kabel verbinden den Elektromotor 58 mit dem Akkumulator 130 zur Übertragung von Energie, wenn eine Betriebsenergie-Schnittstelle 98 des Elektromotors 58 mit einer Betriebsenergie-Gegenschnittstelle 108 des Akkumulators 130 verbunden ist. Zur einfachen, sicheren und schnellen Herstellung einer Energieübertragungsleitung zwischen dem Akkumulator 130 und dem Elektromotor 58 sind die Betriebsenergie-Schnittstelle 98 und die Betriebsenergie-Gegenschnittstelle 108 als elektrische Schnellkupplungs-Bauteile ausgebildet, etwa als Stecker und Buchse. Der Akkumulator 130 ist Teil eines austauschbar mit der Rumpf-Straßenbaumaschine 11 verbundenen Moduls.

Die Kraftanordnung 56 und die Energieversorgungsanordnung 96 vervollständigen die Rumpf-Straßenbaumaschine 11 zu der Straßenbaumaschine 10.

Der Akkumulator 130 weist im dargestellten Ausführungsbeispiel eine integrierte, in Fig. 1 nicht eigens dargestellte Steuereinrichtung auf, welche durch eine zweite Signal-Gegenschnittstelle 111 mittels einer zweiten Signal-Schnittstelle 121 aufseiten der Rumpf-Straßenbaumaschine 11 zur Übertragung von Signalen und Daten mit der Steuereinrichtung 38 an der Rumpf-Straßenbaumaschine 11 verbindbar ist. Auch die Steuereinrichtung des Akkumulators 130 bildet im Betrieb der Straßenbaumaschine 10 eine der Steuereinrichtung 38 untergeordnete Komponentensteuereinrichtung der Straßenbaumaschine 10.

Zusätzlich zum elektrischen Akkumulator 130 ist in der Energieversorgungsanordnung 96 ein weiteres Modul mit einer Brennstoffzelle 132 und mit einem mit der Brennstoffzelle 132 verbundenen Betriebsstofftank 100 vorgesehen. Die Brennstoffzelle 132 setzt den in dem Betriebsstofftank 100 gespeicherten Betriebsstoff in elektrische Energie um. Eine den Betrieb der Brennstoffzelle 132 steuernde Steuereinrichtung 113 ist durch eine dritte Signal-Gegenschnittstelle 112 mittels einer dritten Signal-Schnittstelle 122 aufseiten der Rumpf-Straßenbaumaschine 11 zur Übertragung von Signalen und Daten mit der Steuereinrichtung 38 an der Rumpf-Straßenbaumaschine 11 verbindbar. Die dritte Signal-Schnittstelle 122 kann wie die erste Signal-Schnittstelle 92 oder/und wie die zweite Signal-Schnittstelle 121 ausgestaltet sein. Auch die Steuereinrichtung 113 bildet im Betrieb der Straßenbaumaschine 10 eine der Steuereinrichtung 38 untergeordnete Komponentensteuereinrichtung der Straßenbaumaschine 10.

Zur Energie übertragenden Kopplung des Elektromotors 58 mit der Brennstoffzelle 132 sind eine weitere Betriebsenergie-Schnittstelle 99 des Elektromotors 58 und eine Betriebsenergie-Gegenschnittstelle 109 der Brennstoffzelle 132 als elektrische Schnellkupplungs-Bauteile ausgebildet, etwa als Stecker und Buchse. Elektrische Kabel verbinden den Elektromotor 58 mit der Brennstoffzelle 132 zur Übertragung von Energie, wenn die Betriebsenergie-Schnittstelle 99 mit der Betriebsenergie-Gegenschnittstelle 109 verbunden ist.

Die Rumpf-Straßenbaumaschine 11 weist am Maschinenrahmen 12 bzw. am Maschinenkörper 14 eine Lagerungs-Schnittstelle 62 auf, an welcher die Trageinrichtung 60 durch eine an der Trageinrichtung 60 angeordnete Lagerungs-Gegenschnittstelle 64 festgelegt ist. Im dargestellten Ausführungsbeispiel ist die Lagerungs-Schnittstelle 62 symbolisiert durch drei Kopplungsformationen 62a, mit welchen drei Kopplungsgegenformationen 64a der Lagerungs-Gegenschnittstelle 64 der Trageinrichtung 60 gekoppelt sind. Die Kopplungsformationen 62a und Kopplungsgegenformationen 64a können durch Gewindeeingriff oder durch sonstigen Eingriff aneinander festgelegt sein.

Die Energieversorgungsanordnung 96 ist modular aufgebaut. So lässt sich die Straßenbaumaschine 10 hinsichtlich ihrer Versorgung mit Arbeitsenergie bzw. Arbeitsleistung modular aufbauen und an die jeweiligen Kundenwünsche bzw. Randbedingungen des Einsatzes anpassen.

Fig. 2 zeigt qualitativ den Verlauf des Wirkungsgrads η über die von der Brennstoffzelle 132 ausgegebene Leistung P. Der Graph 210 von Fig. 2 zeigt daher qualitativ den Verlauf eines Faktors zur Berechnung eines Ressourcenaufwands, welcher für eine durch die Brennstoffzelle 132 ausgegebene Energiemenge notwendig ist. Die ausgegebene Energiemenge ist dabei die über die interessierende Zeitspanne integrierte von der Brennstoffzelle 132 ausgegebene Leistung.

Die kleinste sinnvoll dauerhaft von der Brennstoffzelle 132 abgebbare Leistung Pₘᵢₙ kann bei einem anfänglichen Wirkungsgrad ηᵢₙᵢₜ am Betriebspunkt 212 erbracht werden. Ausgehend vom Betriebspunkt 212 nimmt der Wirkungsgrad η bis zu einem Maximalwert ηₘₐₓ in einem besonderen Betriebspunkt 214 zu, in welchem ein der jeweiligen Brennstoffzelle zugeordneter Leistungswert P_{eff} dauerhaft abgegeben werden kann. Im Betriebspunkt 214 kann die Brennstoffzelle 132 mit dem geringsten Ressourcenverbrauch pro Leistungseinheit, etwa pro Kilowatt, betrieben werden. Zwar ist am Betriebspunkt 214 nicht die Leistungsausgabe am größten, jedoch kann am Betriebspunkt 214 elektrische Leistung hinsichtlich des pro erzeugter Leistungseinheit notwendigen Ressourceneinsatzes am effektivsten erzeugt werden.

Ausgehend vom Betriebspunkt 214 größter Effektivität nimmt der Wirkungsgrad des Betriebs der Brennstoffzelle 132 mit zunehmender Leistungsanforderung wieder ab, bis die Brennstoffzelle 132 im Betriebspunkt 216 dauerhaft ihre größte und damit maximale Leistung Pₘₐₓ abgibt. Wie für Brennstoffzellen typisch ist auch für die Brennstoffzelle 132 des Ausführungsbeispiels der Betriebspunkt 216 mit maximal abgegebener Leistung der Betriebspunkt mit dem schlechtesten bzw. geringsten Wirkungsgrad ηₘᵢₙ.

Die Kennlinie 210 ist in einem von der Steuervorrichtung 38 abrufbaren Datenspeicher gespeichert und kann zur Steuerung der Energieversorgungsanordnung 96 berücksichtigt werden.

Die vorliegende Beschreibung des Betriebs der Steuervorrichtung 38 zur Steuerung der Energieversorgungsanordnung 96 ist zum besseren Verständnis stark vereinfacht und ist lediglich schematisch und qualitativ zu verstehen. Die tatsächlich ablaufenden Steuervorgänge sind erheblich komplizierter als nachfolgend geschildert. In einem von der Steuervorrichtung 38 abrufbaren Datenspeicher sind daher weitaus mehr Daten und Kennlinien als lediglich die Kennlinie 210 von Fig. 2 gespeichert.

Fig. 3 soll vereinfacht und schematisch mit der Linie 220 eine Leistungsabgabe P der Ausgangswelle 78 des Elektromotors 58 der Straßenbaumaschine 10 von Fig. 1 als Funktion der Zeit t während der Durchführung einer Bodenbearbeitungsaufgabe, hier: einer Fräsbearbeitung des Bodens, darstellen.

Die gröber gestrichelte Linie 222 zeigt die Leistungsabgabe der Brennstoffzelle 132. Sie ist während der Bearbeitung mit Ausnahme einer anfänglichen Anlaufphase im Wesentlichen konstant. Die Linie 224 zeigt dagegen die von der Brennstoffzelle 132 maximal abgebbare Leistung Pₘₐₓ an. Die Brennstoffzelle 132 läuft daher ausweislich der Darstellung in Fig. 3 etwa mit der Hälfte der maximalen Leistung, was in Fig. 2 ein Betriebspunkt rechts vom Betriebspunkt 214, aber einigermaßen nahe bei dem Betriebspunkt 214 ist. Jedenfalls ist der Betriebspunkt der Leistung der Linie 222 deutlich näher am Betriebspunkt 214 als am Betriebspunkt 216.

Die Betriebsparameter der Funktionsanordnung 41, insbesondere der Arbeitsbaugruppe 40, wurden von der Steuervorrichtung 38 auf Grundlage einer Energiebedarfsinformation bzw. einer Restenergiebedarfsinformation gewählt und eingestellt. Hierzu hat die Steuervorrichtung aus dem insgesamt abzutragenden Volumen, der in die Steuervorrichtung 38 eingegebenen Art des Bodenmaterials und aus den verfügbaren Daten über die eingesetzten Werkzeuge den zur Erledigung der Bearbeitungsaufgabe notwendigen Energiebedarf abgeschätzt und Betriebsparameter ermittelt, die zunächst erwarten lassen, dass der bordeigene Energievorrat der Straßenbaumaschine zur Erledigung der Bearbeitungsaufgabe ausreicht.

Der unruhige Verlauf des Graphen 220 der abgegebenen Leistung rührt von unterschiedlich starken Widerständen im abzutragenden Boden längs der Vorschubbahn her. Beispielsweise kann lokal härteres Gestein oder härterer Asphalt im abzutragenden Boden vorliegen, als in stichprobenartigen Probebohrungen ermittelt wurde.

Die schraffierten Bereiche zwischen dem Graphen 220 der an der Ausgangswelle 78 abgegebenen Leistung und dem Graphen 222 der von der Brennstoffzelle 132 ausgegebene Leistung zeigt eine Veränderung des Ladezustands des Akkumulators 130 an. Von links oben nach rechts unten verlaufend schraffierte Bereiche, wie beispielsweise der Bereich 226, liegen allesamt über dem Graphen 222 und zeigen eine Entladung des Akkumulators 130 an. In diesen Bereichen reicht die von der Brennstoffzelle 132 abgegebene elektrische Leistung nicht aus, um die an der Ausgangswelle 78 benötigte Leistung zu erbringen. Der Akkumulator 130 muss daher elektrische Energie beisteuern, um die Leistungsanforderung gemäß Graph 220 zu erfüllen. Der Akkumulator 130 wird, gesteuert durch die Steuervorrichtung 38 sowie durch die in den Akkumulator 130 integrierte Steuereinrichtung, entladen.

Demgegenüber zeigen von links unten nach rechts oben verlaufend schraffierte Bereiche, wie etwa der Bereich 228, Betriebsphasen an, in denen die im Wesentlichen zeitlich konstante Leistung der Brennstoffzelle 132 die an der Ausgangswelle 78 benötigte Leistung übersteigt. Folgerichtig liegen alle diese Bereiche unterhalb des Graphen 222. In diesen Betriebsphasen sorgt die Steuervorrichtung 38 unter Beteiligung der Steuereinrichtung 113 der Brennstoffzelle 132 und der in den Akkumulator 130 integrierten Steuereinrichtung für einen Energieübertrag von der Brennstoffzelle 132 in den Akkumulator 130. Der Akkumulator 130 wird daher in diesen Phasen geladen.

Die regelmäßig wiederkehrenden kurzen abfallenden Leistungsanforderungen können beispielsweise Wechseln von Lastkraftwagen zum Abtransport von Fräsgut geschuldet sein, das von der Straßenbaumaschine während der Bodenbearbeitung über das oben beschriebene Transportband auf einen Transport-Lkw abgeworfen wird.

Da der Graph 220 Leistung als Funktion der Zeit aufträgt, ist das Integral der Leistung über die Zeit die ausgegebene Energie. Die schraffierten Flächen in Fig. 3 sind daher mit ihrem Flächeninhalt ein Maß für die dem Akkumulator 130 entnommene bzw. hinzugefügte Energiemenge.

Die strichpunktierte vertikale Linie 230 zeigt auf der Zeitachse die Gegenwart der Betrachtung der Grafik an. Alle Ereignisse rechts der Linie 230 in den Figuren 3 bis 6 liegen in der Zukunft, alle Ereignisse links der Linie 230 in den Figuren 3 bis 6 liegen in der Vergangenheit.

Fig. 4 zeigt grobschematisch den im Akkumulator 130 und den für den Betrieb der Brennstoffzelle 132 vorhandenen Energievorrat als Funktion der Zeit t. Der Einfachheit halber gibt die Ordinate in Fig. 4 den Energievorrat in Prozent der Speicherfähigkeit des jeweiligen Speichermediums an. Die Linie 232 zeigt als 100-%-Linie den maximalen Ladezustand des Akkumulators 130 sowie den maximalen Füllzustand des Betriebsstofftanks 100 der Brennstoffzelle 132. Hinter den jeweiligen 100-Prozent-Linien der unterschiedlichen Energiespeicher kann und wird sich in der Realität ein unterschiedlicher Energieinhalt verbergen. Auf den Zahlenwert der jeweils gespeicherten Energiemenge in einer Maßeinheit kommt es vorliegend jedoch nicht an.

Zu Beginn des Bearbeitungsvorgangs sei der Akkumulator 130 vollständig geladen und sei der Betriebsstofftank 100 der Brennstoffzelle 132 vollständig gefüllt.

Die durchgezogene Linie 234 in Fig. 4 zeigt den während des Bearbeitungsfortschritts zu einem jeweiligen Zeitpunkt t im Akkumulator 130 verbleibenden Energievorrat in Prozent an. Dieser Energievorrat wird nachfolgend auch als 'Ladezustand' bezeichnet.

Die punktierte Linie 236 zeigt den Füllgrad des Betriebsstofftanks 100 zum Zeitpunkt t an. Da die Brennstoffzelle 132 ausweislich des Graphen 222 in Fig. 3 jenseits der Anlaufphase eine zeitlich im Wesentlichen konstante Leistung abgibt, nimmt der Betriebsstoffvorrat der Brennstoffzelle 132 mit fortschreitender Bearbeitungsdauer im Wesentlichen linear ab.

Der Akkumulator 130 gibt dagegen Energie ab, um Leistungsspitzen zu bewältigen, deren konkrete Höhe und Dauer nicht exakt vorhersagbar ist. Der Ladezustand des Akkumulators 130 nimmt daher mit fortlaufender Bearbeitungsdauer nicht-linear ab. Der Verlauf des Füllstands des Betriebsstofftanks 100 lässt sich daher anhand des zeitlich im Wesentlichen konstanten Betriebs der Brennstoffzelle 132 mit höherer Genauigkeit vorhersagen als die Entwicklung des Ladezustands des Akkumulators 100.

Die enger gepunktete Linie 238 zeigt eine gerade Trendlinie des Verlaufs des Ladezustands des Akkumulators 130 als Funktion der Zeit an, wie sie beispielsweise durch die Methode der kleinsten Fehlerquadrate oder durch lineare Regression ermittelbar ist. Andere Methoden für eine Prognose des weiteren Verlaufs des Ladezustands des Akkumulators 130 sind alternativ oder zusätzlich ebenso möglich. Die Trendlinie zur Prognose der zukünftigen Entwicklung eines Energievorrats muss keine Gerade sein.

Der Zeitbereich 240 in den Figuren 3 und 4 zeigt einen Zeitbereich an, in dem der Beginn einer Betriebspause der Straßenbaumaschine 10 erwartet wird, weil eine Verschleißanzeige etwa für den Zeitbereich 240 das Erreichen einer Verschleißgrenze der an der Straßenbaumaschine 10 eingesetzten Fräsmeißel erwarten lässt.

Die Dauer B eines Fräsmeißelwechsels für die an der Straßenbaumaschine 10 eingesetzte Fräswalze ist aus zurückliegenden vergleichbaren Vorgängen bekannt. Daher wird im Zeitbereich 242 das Ende der Wartungspause für den Fräsmeißelwechsel und die Wiederaufnahme der Bodenbearbeitung erwartet. Die vertikale Linie 244 in den Figuren 3 und 4 markiert das Schichtende.

Die Trendlinie 238 in Fig. 4 zeigt an, dass ohne weitere Maßnahmen bei fortgesetztem Bearbeitungsbetrieb eine vollständige Entladung des Akkumulators 130 noch vor der erwarteten Wartungspause zwischen den Zeitbereichen 240 und 242 eintritt. Da die Brennstoffzelle in ihrem aktuellen Betriebszustand die für die Bodenbearbeitung erforderliche Leistung an der Ausgangswelle 78 über längere Zeit nicht alleine erbringen kann, würde die Straßenbaumaschine 10 aufgrund des entleerten Akkumulators 130 noch vor Eintritt der Wartungspause stillstehen. Wenn die Wartungspause dann nicht vorgezogen werden kann, etwa weil erforderliches Wartungspersonal oder/und Wartungsmaterial an anderer Stelle gebunden ist, kommt es durch die Entladung des Akkumulators 130 zu einem substantiellen Produktivitätsausfall.

Bestenfalls kann der erfahrene und vorausschauende Maschinenführer die drohende zu starke Entladung des Akkumulators 130 erahnen und aufgrund seiner Erfahrung die Steuerung der Maschine so verändern, dass der drohende Produktivitätsausfall wenigstens verringert wird. Jedoch besteht dabei die Schwierigkeit, dass die in den Figuren 3 und 4 gezeigten Verläufe auch für erfahrene Maschinenführer nicht intuitiv erspürbar und nur in Ausnahmefällen kurzfristig am Bedienpult 36 abrufbar und in ausreichendem Maße auswertbar sind.

Hier greift nun die Steuervorrichtung 38 der vorliegenden Offenbarung mit ihren oben geschilderten Komponentensteuerungen ein, um den Betrieb der Maschine 10 vorausschauend zu führen, sodass die in den mitgeführten Ressourcen vorhandene Energiemenge für die zu erledigende Bearbeitungsaufgabe optimal ausgenutzt werden kann.

Die Fig. 5a und 5b zeigen im Wesentlichen denselben Verlauf 220 der an der Ausgangswelle 78 des Elektromotors 58 abgegebenen Energiemenge. Es soll in den Figuren 5a, 5b, 6a und 6b die gleiche Bearbeitungsaufgabe wie in den Figuren 3 und 4 zugrunde gelegt werden, jedoch bei abweichender Steuerung der Energieversorgungsanordnung 96 (Fig. 5a und 6a) und der Funktionsanordnung 41, insbesondere der Arbeitsbaugruppe 40.

Zunächst zu dem Figurenpaar 5a und 6a.

Zu einem Zeitpunkt 246 ermittelt die Steuervorrichtung 38 die Trendlinie 238. Diese schneidet zum zukünftigen Zeitpunkt 247 die Abszisse, was unter den der Trendermittlung zugrunde gelegten Betriebsparametern eine vollständige Entleerung des Akkumulators zum Zeitpunkt 247 indiziert. Der prognostizierte Zeitpunkt 247 seiner vollständigen Entleerung bildet eine erste Restzeitinformation in Gestalt eines Restzeitpotentials. Unter Fortsetzung des bisherigen Betriebs kann der Akkumulator nur bis zum Zeitpunkt 247 Energie ausgeben, aber nicht zeitlich darüber hinaus. Mit anderen Worten realisiert die Steuervorrichtung 38 durch Extrapolation, dass unter Beibehaltung der aktuellen Betriebsparameter der Ladezustand des Akkumulators 130 gemäß dem Graphen 234 mit überwiegender Wahrscheinlichkeit nicht ausreichen wird, um die aktuell bearbeitete Bearbeitungsaufgabe fertig zu stellen. Vielmehr wird der Akkumulator 130 frühzeitig entladen sein.

Die Steuervorrichtung 38 kann die Trendlinie 238 iterativ in vorgegebenen Zeitabständen oder zu vorgegebenen Zeitpunkten ermitteln und durch Extrapolation in die Zukunft fortschreiben, um zu prüfen, ob der Ladezustand des Akkumulators 130 für die aktuell bearbeitete Bearbeitungsaufgabe ausreicht oder nicht. Die Trendlinie 238 ist somit ein Verfügbarkeitsparameter im Sinne der vorstehenden Offenbarung, welcher die vom Akkumulator 130 abgebbare Energiemenge repräsentiert.

Die Steuervorrichtung 38 erkennt die drohende frühzeitige Entladung des Akkumulators 130 und prüft den Füllgrad des Betriebsstofftanks 100, repräsentiert durch den Graphen 236, als einen weiteren Verfügbarkeitsparameter, welcher die durch die Brennstoffzelle 132 abgebbare Energiemenge repräsentiert. Dabei ist jedoch der jeweilige Wirkungsgrad der Brennstoffzelle 132 zu berücksichtigen, um die Umsetzung der im Brennstofftank 100 gespeicherten Betriebsstoffmenge in elektrische Energie möglichst korrekt vorausschauend zu berechnen. Der Wirkungsgrad der Brennstoffzelle 132 ist der Steuereinrichtung 38 in Gestalt der in Fig. 2 gezeigten Kurve 210 bekannt und zugänglich.

Weiter berücksichtigt die Steuervorrichtung 38 die bei fortgesetztem Betrieb im prognostizierten Zeitraum 240 anstehende Betriebspause aufgrund von geplanter Wartung. Die Zeitdauer vom Ermittlungszeitpunkt 246 bis zum prognostizierten Zeitraum 240 eines Beginns einer technisch notwendigen Betriebspause bildet eine zweite Restzeitinformation, diesmal in Gestalt eines Restzeitkontingents RZK, für die eine Betriebsfähigkeit der Straßenbaumaschine 10 aus Gründen einer möglichst hohen Produktivität aufrechterhalten werden soll. Die Steuervorrichtung 38 versucht nun, durch Erhöhen der Leistungsabgabe der Brennstoffzelle 132 ab dem Zeitpunkt 246 den Ladezustand des Akkumulators 130 bis zum prognostizierten Beginn der Wartungspause im Zeitraum 240 zu strecken und so das Restzeitpotential mit dem Restzeitkontingent RZK in Übereinstimmung zu bringen oder sogar das Restzeitpotential über das Restzeitkontingent RZK hinaus zu vergrößern, um Reaktionsreserven für unvorhergesehene Ereignisse mit möglicherweise erhöhtem Energieverbrauch vorzuhalten.

Die Steuervorrichtung 38 kann dies tun, da der Füllgrad des Betriebsstofftanks 100 ausreichend groß ist. Auch der Füllgrad des Betriebsstofftanks 100, etwa repräsentiert durch den Graphen 236, ist ein Verfügbarkeitsparameter.

Aufgrund der Erhöhung der Leistungsabgabe der Brennstoffzelle 132, in Fig. 5a dargestellt durch den Sprung des Graphen 222, muss der Akkumulator 130 ab dem Zeitpunkt 246 zum einen weniger elektrische Energie zur Erledigung der Bearbeitungsaufgabe beisteuern und wird zum anderen in stärkerem Ausmaß geladen, da die unter dem Graphen der erhöhten Kurve 222 gelegenen Abschnitte der Leistungsanforderung 220 zunehmen und die über dem Graphen der erhöhten Kurve 222 gelegenen Abschnitte der Leistungsanforderung 220 abnehmen.

In der Folge nimmt ab dem Zeitpunkt 246 der Füllgrad des Betriebsstofftanks 100, dargestellt durch die Kurve 236, pro Zeiteinheit stärker ab als vor der Änderung, da zum einen mit der erhöhten Leistungsanforderung an die Brennstoffzelle 132 mehr Betriebsstoff entnommen wird und da, diesem Effekt überlagert, die Brennstoffzelle 132 mit geringerem Wirkungsgrad betrieben wird. Gleichzeitig ändert sich der Verlauf 234 des Ladezustands des Akkumulators 130 aufgrund der zeitlich größeren Anteile an Speicherung von elektrischer Energie im Akkumulator 130 ab dem Zeitpunkt 246 hin zu tendenziell steigendem Energievorrat, also höherem Ladezustand.

Zum Zeitpunkt 230, das ist in den Figuren 5a und 6a der Zeitpunkt der Betrachtung der Diagramme, erkennt die Steuervorrichtung 38, dass der Ladezustand des Akkumulators 130 ausreichend wiederhergestellt ist, um selbst bei stärkerem Entladungstrend 248 als vor der Erhöhung der ausgegebenen Leistung der Brennstoffzelle 132 im Zeitpunkt 246 den Akkumulator 130 mit einer gewissen Sicherheitsmarge SM bis in den Zeitraum 240 betreiben zu können, an dem eine Betriebspause der Arbeitseinrichtung 40 und im Wesentlichen der gesamten Straßenbaumaschine 10 beginnt und voraussichtlich bis zum Zeitraum 242 dauert. Die Steuervorrichtung 38 hat durch ihren Steuerungseingriff an der Brennstoffzelle 132 das Restzeitpotential erfolgreich über das Restzeitkontingent hinaus ausgedehnt.

Die Steuervorrichtung 38 errechnet, dass die im Zeitpunkt 230 im Akkumulator 130 vorhandene Energiemenge eine Energieentnahme bis zum erwarteten Beginn der Betriebspause ermöglicht, welche nun eine Reduzierung der Leistungsabgabe der Brennstoffzelle 132 erlaubt. Die Brennstoffzelle 132 kann voraussichtlich ab dem Zeitpunkt 230 an ihrem hinsichtlich des Kriteriums der Energieeffizienz optimalen Betriebspunkt 214 betrieben werden, was den vorhandenen Betriebsstoffvorrat im Betriebsstofftank 100 streckt.

Für die Betriebspause zwischen den Zeiträumen 240 und 242 ermittelt die Steuervorrichtung 38 die Möglichkeit der Ladung des Akkumulators 130 durch weiteren Betrieb der Brennstoffzelle 132 beim optimalen Betriebspunkt 214 über die Betriebspause hinweg bis zu einem Ladezustand, welche ab dem erwarteten Ende der Betriebspause im Zeitbereich 242 unter Fortsetzung der Bearbeitungsaufgabe mit den eingangs gewählten Betriebsparametern eine Erledigung der Bearbeitungsaufgabe zum Schichtende 244 mit jeweils noch vorhandenen Restbeständen an Ladezustand des Akkumulators 130 und an Betriebsstoff im Betriebsstofftank 100 ermöglicht. Genauer errechnet die Steuervorrichtung 38, dass während der Betriebspause der Dauer B mit dem Betrieb der Brennstoffzelle 132 am Betriebspunkt 214 der Ladezustand des Akkumulators um eine Energiemenge RA erhöht werden kann. Die Energiemenge RA ist ein Regenerierungsparameter im Sinn der obigen Beschreibung.

Die errechneten Restbestände an Ladezustand und an Betriebsstoff ermöglichen der Steuervorrichtung 38 in einem gewissen Maß einen Irrtum in ihrer Prognose bzw. erlauben eine Unsicherheit der Prognose. Da die Steigung der Trendkurve 250 des Ladezustands des Akkumulators 130 ab der erwarteten Wiederaufnahme der Bearbeitung der Bearbeitungsaufgabe der Steigung der Trendkurve 238 zu Beginn der Bearbeitung der Bearbeitungsaufgabe entspricht, liegt dieser Prognose zwischen den Zeiträumen 242 und 244 eine erhebliche Prognosesicherheit zugrunde, da sie von Erfahrungswerten ausgeht, die bereits für die vorliegende konkrete Bearbeitungsaufgabe gewonnen wurden.

Da die Brennstoffzelle 132 ab dem Ende der Betriebspause wieder mit der zu Beginn der Bearbeitung der Bearbeitungsaufgabe geforderten Leistungsabgabe betrieben werden soll, würde sich die Abnahme des Füllgrads des Betriebsstofftanks erhöhen, verglichen mit der Phase zwischen den Zeiträumen 230 und 242 mit effizienz-optimalem Betrieb der Brennstoffzelle 132. Dies kommt in einer stärkeren Neigung der erwarteten Füllgrad Kurve 236 ab dem Zeitpunkt 242 zum Ausdruck, welche der Neigung vor dem Zeitpunkt 246 entspricht.

Für die Zeit zwischen dem aktuellen Zeitpunkt 230 und dem erwarteten Beginn der Betriebspause im Zeitbereich 240 nimmt die Steuervorrichtung 38 an, dass an der Abtriebswelle 78 ein Leistungsprofil an auszugebender Leistung gefordert ist, welches in einem gemittelten Zeitabstand der Zeitabstände bisher eingetretenen Betriebspausen, etwa durch Lkw-Wechsel, kurze Betriebspausen von einer über die Dauer der bisherigen Betriebspausen gemittelten Dauer enthält und dazwischen einen Leistungsabruf zeigt, welcher den über die letzten drei zurückliegenden Bearbeitungszyklen zwischen jeweils zwei unmittelbar aufeinander folgenden kurzen Betriebspausen hinweg gemittelten Leistungsabrufen entspricht. Dies sei nur als ein mögliches vereinfachtes Beispiel zur Veranschaulichung der Prognoseermittlung erwähnt.

In den Fig. 5b und 6b ist ein alternatives Szenario dargestellt, in welchem die Steuervorrichtung 38 im Zeitpunkt 246 auf das mit dem Zeitpunkt 247 ermittelte Restzeitpotential hin anstelle der Brennstoffzelle 132 die Arbeitsbaugruppe 40 manipuliert.

Im Zeitpunkt 246 verringert die Steuervorrichtung die Drehzahl der Fräswalze 44 oder/und den Vorschub der Straßenbaumaschine 10 und verringert so die von der Arbeitsbaugruppe 40 benötigte Leistungsaufnahme. Der Graph 220 der von der Ausgangswelle 78 abgegebenen Leistung sinkt daher ab dem Zeitpunkt 246, verglichen mit der gleichen Bearbeitungsaufgabe in den Fig. 3 und 5a.

Aufgrund der verringerten Leistungsanforderung steigt bei gleicher abgegebener Leistung der Brennstoffzelle 132 ab dem Zeitpunkt 246, verglichen mit der herkömmlichen Steuerung gemäß Fig. 3, der Anteil an Betriebsphasen, in denen der Akkumulator 130 durch die Brennstoffzelle geladen wird und sinkt der Anteil an Betriebsphasen, in denen der Akkumulator 130 entladen wird. Als eine Folge dieser Maßnahme nimmt der Ladezustand des Akkumulators 130 weniger stark ab oder nimmt sogar zu. Dies führt zu einer Vergrößerung des Restzeitpotentials.

Als eine zweite Folge der Verringerung der Arbeitsleistung der Fräswalze 44 bzw. der Arbeitsbaugruppe 40 verlängern sich ab dem Zeitpunkt 246 die Betriebsphasen, bis ein bestimmtes Ereignis erreicht ist, etwa ein bestimmter Bearbeitungszustand des Bodens oder eine Füllung des Lkws zum Abtransport des Fräsguts, von welchem mit reduzierter Leistung nun pro Zeiteinheit weniger anfällt. Daher finden nun zwischen den Zeitpunkten 246 und 230 nur noch zwei Betriebsphasen statt und nicht mehr drei, wie in Fig. 3 oder im Beispiel von Fig. 5a.

Außerdem verschleißen die Fräsmeißel der Fräswalze 40 bei verringerter Arbeitsleistung der Fräswalze weniger, wodurch sich der Beginn der erforderlichen Wartung in Richtung später verschiebt. Das Restzeitkontingent RZK im Beispiel der Fig. 5b und 6b ist größer als jenes des Beispiels der Fig. 5a und 6a. Da aufgrund der verringerten Arbeitsleistung der Verschleiß weniger stark abnimmt als der Ladezustand des Akkumulators 130 sich erholt, vergrößert die Steuervorrichtung 38 erneut erfolgreich das Restzeitpotential über das erhöhte Restzeitkontingent RZK hinaus.

Als dritte Folge der Verringerung der Arbeitsleistung der Fräswalze 44 benötigt die Bearbeitungsaufgabe mehr Zeit.

Ab dem Zeitpunkt 230 wird die Arbeitsbaugruppe wieder mit der gleichen Leistungsanforderung betrieben wie vor dem Zeitpunkt 246, da sich der Ladezustand des Akkumulators 130 ausreichend erholt hat.

Die Maßnahme eines Steuerungseingriffs in die Funktionsanordnung 41 bzw. in die Arbeitsbaugruppe 40 gemäß den Fig. 5b und 6b ist beispielsweise dann angezeigt, wenn der Brennstoffvorrat der Brennstoffzelle 132 oder ein Energie-Parameter, wie z. B. die Temperatur der Brennstoffzelle, eine Erhöhung der Leistungsabgabe der Brennstoffzelle 132 nicht gestattet.

Die Prognosen der Steuervorrichtung für die weitere Entwicklung der mitgeführten nutzbaren Energie entsprechen qualitativ den zu den Figuren 5a und 6a geschilderten, da sich ab Beginn der Werkzeugwartung in Zeitraum 240 der erwartete weitere Ablauf der Bearbeitungsaufgabe nicht von jener aus dem Beispiel der Fig. 5a und 6a unterscheidet. Die Dauer des Wartungsintervalls ist unabhängig von der vorherigen Verringerung der Arbeitsleistung der Fräswalze 44.

Die Steuervorrichtung 38 kann prüfen, ob die während der Dauer B des Wartungsintervalls im Akkumulator 130 aufgenommene Energiemenge RA gemeinsam mit dem Füllstand des Betriebsstofftanks 100 nach dem Ende der Wartung zum Zeitpunkt 242 eine Erhöhung der Arbeitsleistung der Arbeitsbaugruppe 40 gegenüber dem Betriebszustand vor dem Zeitpunkt 246 ermöglicht, um wenigstens einen Teil des zwischen den Zeitpunkten 246 und 230 erlittenen Bearbeitungsrückstands aufzuholen. Fig. 7 zeigt den vollständigen Verlauf der Leistungsabgaben bzw. Leistungsverschiebungen während der gesamten Bearbeitung der Bearbeitungsaufgabe bis zum Schichtende zum Zeitpunkt 244 gemäß dem ersten Beispiel, das in den Figuren 5a und 6a dargestellt ist.

Da nun die gesamte Bearbeitungsvorgang abgeschlossen ist, sind im Gegensatz zu den zum Zeitpunkt 230 betrachteten Diagrammen der Figuren 5 und 6 in den Diagrammen der Figuren 7 und 8 die genauen Zeitpunkte 240 und 242 des Beginns und des Endes der Betriebspause bekannt.

Wie dem Diagramm von Fig. 7 zu entnehmen ist, hat die Betriebspause mit dem Ende einer kurzen dritten Betriebsphase nach dem Zeitpunkt 230 begonnen.

Fig. 8 zeigt den Verlauf des nutzbaren Energievorrats an der Straßenbaumaschine 10 in Gestalt des Ladezustands des Akkumulators 130 gemäß Kurve 234 und in Gestalt des Füllstands des Betriebsstofftanks 100, repräsentiert durch die Kurve 236.

Wie der Verlauf des Ladezustands des Akkumulators 130 zum Zeitpunkt 240 des Beginns der Betriebspause zeigt, ist es wichtig, mit einer Sicherheitsmarge zu rechnen, denn tatsächlich hat der reale Ladezustand den prognostizierten Ladezustand im Zeitpunkt 240 unterschritten.

Wenngleich die tatsächliche Leistungsabgabe der Kraftanordnung 58, im vorliegenden Fall repräsentiert durch die Ausgangswelle 78 des Elektromotors 58, in der überwiegenden Vielzahl der Fälle nicht exakt der prognostizierten Leistungsabgabe entsprechen wird, ermöglicht die gemäß der vorliegenden Offenbarung vorgestellte Steuervorrichtung 38 auf Grundlage von Verfügbarkeitsparametern, welche die durch die Energieversorgungsanordnung 96 und ihre einzelnen Energieversorgungsvorrichtungen abgebbare Energiemenge repräsentieren sowie unter vorteilhafter Kenntnis zukünftiger betriebsrelevante Ereignisse, wie etwa einer längeren Betriebspause sowie kürzerer Betriebspausen, den Betrieb der Straßenbaumaschine 10 so zu steuern, dass die vorhandene Energiemenge für die vorgesehene Betriebsdauer oder/und zur Erledigung einer vorgegebenen Bearbeitungsaufgabe, gegebenenfalls unter Verlängerung der hierfür nötigen Bearbeitungszeit, ausreicht.

Sofern, wie im oben dargelegten Beispiel, die Steuervorrichtung 38 lediglich den Betrieb der Energieversorgungsanordnung 96 verändert, um mit der an Bord mitgeführten Energiemenge zu haushalten, treten in der Regel keine oder nur unwesentliche Veränderungen in der insgesamt geplanten Bearbeitungszeit auf.

Zusätzlich oder alternativ kann die Steuervorrichtung 38 zur Steuerung der Verwendung der verfügbaren Energiemenge auch die von der Ausgangswelle 78 bzw. ganz allgemein die von der Kraftanordnung 56 ausgegebene Leistung verändern. Auch dies kann dazu dienen, dass insgesamt eine Bearbeitungsaufgabe beendet werden kann, die ohne die Steuerungseingriffe ansonsten aufgrund eines eintretenden Maschinenstillstands nicht beendet werden könnte, wenngleich dann die hierfür benötigte Bearbeitungszeit in der Regel verlängert wird, da mehr Bearbeitungszyklen bis zur vollständigen Erledigung der Bearbeitungsaufgabe notwendig sind als ohne die Steuerungseingriffe. In den meisten Fällen ist es jedoch vorteilhafter, eine Bearbeitungsaufgabe geringfügig später als geplant abzuschließen, als aufgrund von stillstehenden Maschinen und möglicherweise erzwungenen Bearbeitungspausen aufgrund von Dunkelheit und dergleichen, die Bearbeitungsaufgabe in die folgende Schicht übernehmen und dort beenden zu müssen.

## Patentansprüche

1. Straßenbaumaschine (10), umfassend:
- einen Maschinenrahmen (12),
- ein auf einem Untergrund (U) abrollbar aufstehendes Fahrwerk (26), welches mit dem Maschinenrahmen (12) verbunden ist und den Maschinenrahmen (12) über dem Untergrund (U) trägt,
- eine vom Maschinenrahmen (12) getragene Funktionsanordnung (41) mit einer Mehrzahl von Funktionsbaugruppen (16, 18, 28, 38, 40, 46, 54), umfassend:
+ als eine erste Funktionsbaugruppe eine Arbeitsbaugruppe (40) zur Bearbeitung eines von der Straßenbaumaschine (10) verschiedenen Bearbeitungsobjekts, und
+ als eine zweite Funktionsbaugruppe wenigstens einen Fahrantrieb (28) zur selbständigen Bewegung der Straßenbaumaschine (10) auf dem Untergrund (U),
- eine Energieversorgungsanordnung (96) zur Versorgung der Funktionsanordnung (41) mit Energie,
- eine Steuervorrichtung (38) zur Steuerung wenigstens der Funktionsanordnung (41),
**dadurch gekennzeichnet, dass** die Steuervorrichtung (38) zusätzlich dazu ausgebildet ist, die Funktionsanordnung (41) oder/und die Energieversorgungsanordnung (96) auf Grundlage wenigstens eines Verfügbarkeitsparameters (236, 238) zu steuern, wobei der wenigstens eine Verfügbarkeitsparameter (236, 238) eine mittels der Energieversorgungsanordnung (96) abgebbare Energiemenge repräsentiert.

2. Straßenbaumaschine (10) nach Anspruch 1,
**dadurch gekennzeichnet, dass** der Verfügbarkeitsparameter (236, 238) einen zeitbezogenen Verfügbarkeitsparameter umfasst oder ein zeitbezogener Verfügbarkeitsparameter ist, welcher eine mittels der Energieversorgungsanordnung (96) abgebbare Energiemenge pro Zeiteinheit repräsentiert.

3. Straßenbaumaschine (10) nach Anspruch 1 oder 2,
**dadurch gekennzeichnet, dass** die Steuervorrichtung (38) dazu ausgebildet ist, die Funktionsanordnung (41) oder/und die Energieversorgungsanordnung (96) zusätzlich zum Verfügbarkeitsparameter (236, 238) unter Berücksichtigung
- wenigstens eines künftigen Betriebsereignisses (240) der Funktionsanordnung (41) oder/und der Energieversorgungsanordnung (96) oder/und
- wenigstens eines Betriebszustandes der Funktionsanordnung (41) oder/- und der Energieversorgungsanordnung (96)
zu steuern.

4. Straßenbaumaschine (10) nach einem der vorhergehenden Ansprüche, **dadurch gekennzeichnet, dass** die Steuervorrichtung (38) dazu ausgebildet ist, die Funktionsanordnung (41) oder/und die Energieversorgungsanordnung (96) auf Grundlage wenigstens einer Restzeitinformation (247, RZK) zu steuern, wobei die wenigstens eine Restzeitinformation (247, RZK) eine Restbetriebsdauer der Arbeitsbaugruppe (40) repräsentiert.

5. Straßenbaumaschine (10) nach Anspruch 4,
**dadurch gekennzeichnet, dass** die Steuervorrichtung (38) dadurch zur Steuerung der Funktionsanordnung (41) oder/und der Energieversorgungsanordnung (96) nach Maßgabe des Verfügbarkeitsparameters auf Grundlage wenigstens einer Restzeitinformation (247, RZK) ausgebildet ist, dass die Steuervorrichtung (38) die Funktionsanordnung (41) oder/und die Energieversorgungsanordnung (96) nach Maßgabe eines Vergleichs eines Restzeitpotentials (247) mit einem Restzeitbedarf oder/und mit einem Restzeitkontingent (RZK) steuert.

6. Straßenbaumaschine (10) nach Anspruch 4 oder 5,
**dadurch gekennzeichnet, dass** die Steuervorrichtung (38) dazu ausgebildet ist, wenigstens einen Teil der wenigstens einen Restzeitinformation (247, RZK) aus wenigstens einem Zeitinformations-Parameter zu ermitteln, wobei der wenigstens eine Zeitinformations-Parameter wenigstens einen der folgenden Parameter umfasst oder/und auf Grundlage wenigstens eines der folgenden Parameter ermittelt wird:
- wenigstens einen Funktions-Parameter der Funktionsanordnung (41),
- wenigstens einen Betriebsparameter der Funktionsanordnung (41),
- wenigstens einen Energie-Parameter der Energieversorgungsanordnung (96),
- wenigstens einen Bearbeitungsparameter einer aktuell ausgeführten oder/und künftig auszuführenden Bearbeitungsaufgabe,
- wenigstens einen Baustellenparameter,
wobei der wenigstens eine Funktions-Parameter wenigstens eine Leistungsaufnahme wenigstens einer Funktionsbaugruppe repräsentiert, wobei der wenigstens eine Energie-Parameter wenigstens einen Zustandsparameter oder/und wenigstens einen Betriebsparameter wenigstens einer Energieversorgungsanordnung repräsentiert, wobei der wenigstens eine Bearbeitungsparameter Information über eine noch auszuführende aktuelle oder/und künftige Bearbeitungsaufgabe repräsentiert und wobei der wenigstens eine Baustellenparameter Information über die Struktur oder/und Organisation der Baustelle repräsentiert, auf der die Straßenbaumaschine eingesetzt ist.

7. Straßenbaumaschine (10) nach einem der vorhergehenden Ansprüche, **dadurch gekennzeichnet, dass** die Steuervorrichtung (38) dazu ausgebildet ist, die Funktionsanordnung (41) oder/und die Energieversorgungsanordnung (96) auf Grundlage einer Restenergiebedarfsinformation zu steuern, wobei die Restenergiebedarfsinformation einen Restenergiebedarf der Straßenbaumaschine (10) repräsentiert.

8. Straßenbaumaschine (10) nach Anspruch 7,
**dadurch gekennzeichnet, dass** die Steuervorrichtung (38) dazu ausgebildet ist, die Restenergiebedarfsinformation aus wenigstens einem Energiebedarfs-Parameter zu ermitteln, wobei der wenigstens eine Energiebedarfs-Parameter wenigstens einen der folgenden Parameter umfasst:
- wenigstens einen Funktions-Parameter der Funktionsanordnung (41),
- wenigstens einen Betriebsparameter der Funktionsanordnung (41),
- wenigstens einen Energie-Parameter der Energieversorgungsanordnung,
- wenigstens einen Bearbeitungsparameter einer aktuell ausgeführten oder/und künftig auszuführenden Bearbeitungsaufgabe,
- wenigstens einen Baustellenparameter,
wobei der wenigstens eine Funktions-Parameter wenigstens eine Leistungsaufnahme wenigstens einer Funktionsbaugruppe (16, 18, 28, 38, 46, 54) repräsentiert, wobei der wenigstens eine Energie-Parameter wenigstens einen Zustandsparameter oder/und wenigstens einen Betriebsparameter wenigstens einer Energieversorgungsanordnung (96) repräsentiert, wobei der wenigstens eine Bearbeitungsparameter Information über eine noch auszuführende aktuelle oder/und künftige Bearbeitungsaufgabe repräsentiert und wobei der wenigstens eine Baustellenparameter Information über die Struktur oder/und Organisation der Baustelle enthält, auf der die Straßenbaumaschine eingesetzt ist.

9. Straßenbaumaschine (10) nach einem der vorhergehenden Ansprüche, **dadurch gekennzeichnet, dass** die Steuervorrichtung (38) dazu ausgebildet ist, die Funktionsanordnung (41) oder/und die Energieversorgungsanordnung (96) unter Berücksichtigung wenigstens eines Regenerierungsparameters (RA) zu steuern, wobei der wenigstens eine Regenerierungsparameter (RA) eine in die Energieversorgungsanordnung (96) einspeisbare Energiemenge repräsentiert.

10. Straßenbaumaschine (10) nach einem der vorhergehenden Ansprüche, **dadurch gekennzeichnet, dass** die Funktionsanordnung (41) Energie einer vorbestimmten Energieform benötigt, wobei die Energieversorgungsanordnung (96) als eine Mehrzahl von Energieversorgungsvorrichtungen (100, 132) entweder
a) eine Mehrzahl von unterschiedlichen Energiespeichern (100) umfasst, welche jeweils Energie in der vorbestimmten Energieform bereitstellen, oder
b) eine Mehrzahl von unterschiedlichen Energiewandlern (132) umfasst, welche jeweils auf Grundlage unterschiedlicher physikalischer Wirkprinzipien Energie, die in einer von der vorbestimmten Energieform abweichenden Energieform bereitgestellt ist, in die vorbestimmte Energieform umwandeln, oder
c) wenigstens einen Energiespeicher (100) gemäß a) und wenigstens einen Energiewandler (132) gemäß b) aufweist,
wobei der wenigstens eine Verfügbarkeitsparameter (236, 238) jeweils einen vorrichtungsbezogenen Verfügbarkeitsparameter (236, 238) für jede Energieversorgungsvorrichtung (100, 132) aus wenigstens zwei Energieversorgungsvorrichtungen (100, 132) aus der Mehrzahl von Energieversorgungsvorrichtungen (100, 132) aufweist, wobei die Steuervorrichtung (38) dazu ausgebildet ist, die Funktionsanordnung (41) oder/und die Energieversorgungsanordnung (96) auf Grundlage der vorrichtungsbezogenen Verfügbarkeitsparameter (236, 238) zu steuern.

11. Straßenbaumaschine (10) nach Anspruch 10,
**dadurch gekennzeichnet, dass** die Steuervorrichtung (38) dazu ausgebildet ist, eine Leistungsaufnahme wenigstens einer Funktionsbaugruppe (41) oder/- und eine Energieabgabe wenigstens einer Energieversorgungsvorrichtung (100, 132) mengenmäßig zu beschränken.

12. Straßenbaumaschine (10) nach Anspruch 11,
**dadurch gekennzeichnet, dass** die Steuervorrichtung (38) dazu ausgebildet ist, eine Energieabgabe von Energie in der vorbestimmten Energieform durch eine Mehrzahl von Energieversorgungsvorrichtungen (100, 132) zu kombinieren.

13. Straßenbaumaschine (10) nach einem der Ansprüche 10 bis 12,
**dadurch gekennzeichnet, dass** die vorbestimmte Energieform elektrische Energie ist, wobei die Energieversorgungsanordnung (96) wenigstens zwei der folgenden Energieversorgungsvorrichtungen umfasst:
- eine Batterie (100),
- einen Netzanschluss,
- eine Brennstoffzelle (132),
- einen Generator.

14. Straßenbaumaschine (10) nach Anspruch 13,
**dadurch gekennzeichnet, dass** die Energieversorgungsanordnung (96) eine aufladbare Batterie (100) und wenigstens eine der weiteren Energieversorgungsvorrichtungen aufweist:
- eine Brennstoffzelle (132),
- einen Netzanschluss,
- einen Generator,
wobei die wenigstens eine weitere Energieversorgungsvorrichtung (132) zur Energieabgabe an die aufladbare Batterie (100) ausgebildet ist, und wobei die Steuervorrichtung (38) dazu ausgebildet ist, die Abgabe an Energie durch die wenigstens eine weitere Energieversorgungsvorrichtung (132) an die aufladbare Batterie (100) zu steuern, um die aufladbare Batterie (100) zu laden.

15. Straßenbaumaschine (10) nach einem der vorhergehenden Ansprüche, **dadurch gekennzeichnet, dass** die Arbeitsbaugruppe (40) eine um eine Fräsachse (R) rotierbare Fräswalze (44) umfasst, wobei die Straßenbaumaschine (10) eine Straßenfräse oder ein Surface-Miner oder ein Recycler oder ein Stabilisierer ist.
